# EUROPEAN PATENT APPLICATION

(11) **EP 2 819 231 A1**
(43) Date of publication of application: **31.12.2014**
(21) Application number: 14173377.4
(22) Date of filing: 23.06.2014
(51) Int. Cl.: H01M 8/24, H01M 8/02

(54) **Solid oxide fuel cell and manufacturing method and manufacturing apparatus for same**

(30) Priority: 27.06.2013 JP 2013135082; 27.06.2013 JP 2013135083
(71) Applicant: TOTO LTD., Kitakyushu-shi Fukuoka 802-8601 (JP)
(72) Inventor: Tanaka, Shuhei, Kitakyushu-shi, Fukuoka 8028601 (JP); Watanabe, Naoki, Kitakyushu-shi, Fukuoka 8028601 (JP); Isaka, Nobuo, Kitakyushu-shi, Fukuoka 8028601 (JP); Hoshiko, Takuya, Kitakyushu-shi, Fukuoka 8028601 (JP); Sato, Masaki, Kitakyushu-shi, Fukuoka 8028601 (JP); Momiyama, Yutaka, Kitakyushu-shi, Fukuoka 8028601 (JP); Ando, Shigeru, Kitakyushu-shi, Fukuoka, Fukuoka 8028601 (JP); Furuya, Seiki, Kitakyushu-shi, Fukuoka 8028601 (JP); Hayama, Kiyoshi, Kitakyushu-shi, Fukuoka 8028601 (JP); Okamoto, Osamu, Kitakyushu-shi, Fukuoka 8028601 (JP)
(74) Representative: Witte, Weller & Partner Patentanwälte mbB

(57) **Abstract**

Summary

The present invention is a manufacturing method for a solid oxide fuel cell apparatus (1) in which multiple fuel cells are adhered and affixed to a first affixing member (63) attached within a fuel cell module (2), the method includes steps of: inserting one end portion of each fuel cell (16) into respective insertion holes (63a) provided in a first affixing member; respectively positioning one end portion of each fuel cell inserted into each insertion hole relative to a fuel cell module; respectively positioning the other end portion of each fuel cell at a predetermined position relative to the fuel cell module; applying ceramic adhesive onto the first affixing member into which each of the fuel cells is inserted; and hardening the applied ceramic adhesive and affixing each of the fuel cells to the first affixing member.

## Description

### Technical Field

0001 The invention pertains to a solid oxide fuel cell, and more particularly to a solid oxide fuel cell and manufacturing method and manufacturing apparatus for same.

### Background Art

0002 Solid oxide fuel cells ("SOFCs" below) are fuel cells which operate at a relatively high temperature in which, using an oxide ion-conducting solid electrolyte as electrolyte, with electrodes attached to both sides thereof, fuel gas is supplied to one side thereof and oxidant gas (air, oxygen, or the like) is supplied to the other side thereof.

0003 A fuel flow path for supplying fuel to fuel cells, and an oxidant gas flow path or the like for supplying oxidant gas such as air, are built into a solid oxide fuel cell, and more particularly into a fuel cell module housing containing fuel cells. Normally these flow paths would be constituted of multiple constituent members, and flow paths are formed by the jointing of each of the constituent products. Since solid oxide fuel cells generally operate at high temperatures of 600 to 1000°C, each of the constituent members must be joined so as to withstand such high temperatures. In addition, airtightness must be secured in the joint portions of each constituent part forming the fuel flow path, the fuel gas flow path, and the like.

0004 Therefore inside the fuel cell module, on joint portions for which airtightness is required between constituent members, methods have been used such as mechanically affixing the constituent members with bolts or the like, then applying glass in paste form into the joint portion to secure airtightness.

In the fuel cells set forth in Japanese Patent 3894860 (Patent Document 1) and Japanese Published Unexamined Patent Application H6-215782 (Patent Document 2), adhesion of the constituent members in a fuel cell module using ceramic adhesive is described.

### Prior Art References

0005 Patent Documents
Patent Document 1
   Japanese Patent 3894860
Patent Document 2
   Japanese Published Unexamined Patent Application H06-215782

### Summary of the Invention

### Problems the Invention Seeks to Resolve

0006 However, when constituent parts are affixed using bolts inside a fuel cell module, chrome components vaporize from the bolts when exposed to high temperatures, causing chrome poisoning of the fuel cells, leading to degradation of the cells. The problem can also arise that when sealing is done using glass in order to achieve airtightness at joining portions, boron vaporizes from the glass, causing degradation of fuel cells.

0007 On the other hand, with the adhesion method using the ceramic adhesive set forth in Japanese Patent 3894860 and Japanese Published Unexamined Patent Application H6-215782, the aforementioned types of degradation to the fuel cells can be avoided. However, when fuel cells are affixed using ceramic adhesive, the problem arises that they cannot be subsequently removed or adjusted. In general, because the power generated by a single fuel cell is extremely small, a large number of fuel cells are electrically connected and used in fuel cells apparatuses. In such cases it is common to assemble a fuel cell stack in which multiple fuel cells are electrically connected, and to install such a fuel cell stack into a case containing multiple sets of fuel cell modules, affixing it there.

0008 However, fuel cells are comprised of ceramic members, and are unavoidably subject to relatively large dimensional margins of error. Therefore even greater error margins occur in the dimensional shapes of fuel cell stacks in which multiple fuel cells are assembled. When there are error margins in the dimensional shape of the fuel cell stack, installation of the stack into a fuel cell module case becomes impossible. Here, when a fuel cell stack has been assembled with bolts or the like, installation can be performed by readjusting the stack assembly when the fuel cell stack is installed into the fuel cell module case.

0009 However, when a fuel cell stack is assembled using ceramic adhesive, it is impossible to readjust after the adhesive has hardened, and fuel cell stacks which have become impossible to insert must be scrapped. Therefore when affixing with ceramic adhesive, the problem arises that fuel cell yield drops dramatically. Also, when the positioning accuracy by which each fuel cell is assembled is low, the flow of air or fuel around each fuel cell becomes uneven, leading to the problem of air depletion or fuel depletion in some of the fuel cells, causing damage.

0010 In addition, the present inventors have discovered the new technical problem that when a solid oxide fuel cell apparatus is assembled using ceramic adhesive, then even if the ceramic adhesive hardens to a strength sufficient to withstand practical use and is also able to secure sufficient airtightness for practical use, airtightness in the adhered parts is lost when the fuel cell apparatus is first operated and exposed to high temperatures. I.e., even in a state in which adhered ceramic adhesive is hardened and sufficient airtightness and adhesive strength are obtained, small amounts of moisture or other evaporable solvents remain within the hardened ceramic adhesive layer. In particular, when residual moisture or solvents remain in large amounts in a concentrated form internally, the hardened ceramic adhesive layer is heated at an extremely high speed to temperatures far higher than the temperatures at the time of drying and hardening, so that the residual moisture or solvent expands volumetrically and evaporates, at which point this expansion, etc. acts to burst open the weak portions of the surface of the already hardened ceramic adhesive layer, creating new cracks. The cause of such losses in airtightness occurring during practical use has been determined by the inventors.

0011 That is, when ceramic adhesive is used for the assembly of solid oxide fuel cell apparatuses, such apparatuses cannot withstand the temperature rise in the startup step given the drying and hardening states found in commonly used ceramic adhesives. To reduce residual moisture or solvents in the interior of the ceramic adhesive layer to a state whereby it can withstand the temperature rise during the startup step requires even longer times time for slow and sufficient drying to occur. For such reasons, extremely long times are required for the assembly of solid oxide fuel cell apparatuses in which ceramic adhesives are used, making their practical use extremely difficult.

For these reasons, the reality is that ceramic adhesives are not used in actual products for bonding together constituent parts inside a fuel cell module.

0012 Also, when assuring airtightness by flowing glass in paste form into bonded portions after mechanically affixing constituent parts using bolts or the like, two processes are required for each location, raising costs due to the increase in manufacturing steps. On the other hand, in conventional bonding using ceramic adhesives, it was difficult to achieve reliable seals between constituent parts while also affixing the constituent parts to one another.

0013 I.e., because solvents such as water vaporize when a ceramic adhesive is dried after being applied, and volume shrinks, peeling and excessive cracking associated with shrinkage occurs in the ceramic adhesive layer after hardening unless this shrinkage is skillfully controlled. When such peeling or cracking does occur in the ceramic adhesive layer, sufficient airtightness properties cannot be secured in those bonded portions even though sufficient adhesion strength may be obtained between constituent parts. In order to compensate for these defects in airtightness, it has been proposed to coat the top of the ceramic adhesive layer with glass after adhesion (Japanese Patent 3894860, Paragraph 0029). However, when a ceramic adhesive layer is coated with glass, the number of manufacturing steps increases and the problem of boron evaporation from the glass occurs, so there is no advantage whatsoever to using the ceramic adhesive.

0014 Peeling or cracks in ceramic adhesive layers are prone to occur when adhered ceramic adhesive is suddenly dried. It is therefore possible to substantially avoid peeling or cracking by slow, natural drying of adhered ceramic adhesive at room temperature. However, when ceramic adhesive is dried naturally, an extremely long period of time is required until sufficient adhesion strength can be obtained at the bonded portion, and during that time material cannot be moved to the next manufacturing step. In general, because an extremely large number of manufacturing steps is required to assemble a solid oxide fuel cell apparatus, adhesion by ceramic adhesive is completely impractical for industrial use with natural drying, particularly in the manufacture of solid oxide fuel cells in which there are a large number bonded locations, and also multiple manufacturing steps.

0015 I.e., drying of an assembled body to which adhesive has been applied in a drying oven or the like to promote drying of the adhesive, as is generally done, causes excessive cracks to form in the hardened ceramic adhesive layer. Of the various ceramic adhesives applied by coating, it is areas such as the parts receiving large amounts of drying heat, or locations to which it is difficult for heat to diffuse and therefore subjected to temperature rises, or parts easily affected by humidity gradients caused by contact with the atmosphere, which are first dried and hardened. Hardening thus begins at specific parts of the surface layer, and even within the surface layer hardening does not start uniformly nor is the hardened state uniform, so uniform hardening of all portions is not possible. Next, when adhesive on the interior of a hardened surface portion or surrounding a hardened surface is dried, stress concentrates with the shrinkage of weak portions where drying is still not sufficiently completed in areas surrounding ceramic adhesive which has already hardened, and cracks form in these weak portions, compromising airtightness. Although the use of ceramic adhesives in the assembly of solid oxide fuel cell apparatuses is set forth in the patent documents, there are problems with airtightness, and the fact that they have still not been put to practical use is believed to result from such causes.

0016 Therefore the invention has the object of providing a solid oxide fuel cell apparatus in which constituent parts within a fuel cell module are hermetically bonded using ceramic adhesive, as well as a manufacturing method and manufacturing apparatus for same.

### Means for Resolving Problems

0017 In order to resolve the aforementioned problems, the present invention is a manufacturing method for a solid oxide fuel cell apparatus in which multiple fuel cells are adhered and affixed to a first affixing member attached within a fuel cell module, the method comprising steps of: inserting one end portion of each of the fuel cells into respective insertion holes provided in the first affixing member; respectively positioning one end portion of each of the fuel cells inserted into each of the insertion hole relative to the fuel cell module; respectively positioning the other end portion of each of the fuel cells at a predetermined position relative to the fuel cell module; applying ceramic adhesive onto the first affixing member into which each of the fuel cells is inserted; and hardening the applied ceramic adhesive and affixing each of the fuel cells to the first affixing member.

0018 In the invention thus constituted, one end portion of each of the fuel cell is inserted into the respective insertion holes formed in a first affixing member attached to the inside of a fuel cell module, and one end portion of each of the fuel cell inserted into the respective insertion holes is respectively positioned relative to the fuel cell module. Moreover, the other end portion of each of the fuel cell is positioned at a predetermined position relative to the fuel cell module. Next, ceramic adhesive is applied onto the first affixing member into which each of the fuel cell is inserted, and each of the fuel cell is affixed to the first affixing member by the hardening of the ceramic adhesive.

0019 In the invention thus constituted, each fuel cell is directly positioned relative to the first affixing member attached to the inside of the fuel cell module, without assembly as a fuel cell stack. Therefore it does not occur that a fuel cell stack in which multiple fuel cells are assembled will be incapable of attachment inside the fuel cell module. Also, multiple fuel cells in which one end portion and the other end portion are positioned relative to a fuel cell module are temporarily affixed by ceramic adhesive applied onto a first affixing member, therefore assembly does not become impossible at the stage in which assembly using ceramic adhesive has terminated midway through completion. If there are fuel cells which cannot be positioned to a particular position due to manufacturing tolerances, it is sufficient to discard only those fuel cells, and yield can be improved.

0020 In the present invention, the other end portion of each of the fuel cell is preferably inserted into insertion holes provided on a second affixing member, the method further comprising steps of: applying ceramic adhesive onto the second affixing member into which the other end portion of each of the fuel cells is inserted; and hardening the applied ceramic adhesive and affixing each of the fuel cells to the second affixing member.

0021 In the invention thus constituted, the other end of each fuel cell is affixed by ceramic adhesive applied onto a second affixing member into which these other end portions are inserted, so that both end portions of multiple fuel cells can be affixed extremely efficiently inside the fuel cell module.

0022 The present invention, furthermore, preferably comprises a solvent removal and hardening step in which ceramic adhesive applied onto the first affixing member and second affixing member and hardened is dried to a state capable of withstanding a temperature rise in a startup procedure of the solid oxide fuel cell apparatus.

0023 In general, a ceramic adhesive cannot withstand the temperature rise in the startup process of a solid oxide fuel cell apparatus in a state in which the ceramic adhesive is merely hardened and a certain adhesive strength obtained. When the temperature is raised in such a state, cracks form in the hardened ceramic adhesive, and the airtightness of the adhered portion is lost. It is therefore necessary to dry the hardened ceramic adhesive to a state capable of withstanding the temperature rise in the startup process. However, because a solvent removal and hardening step is executed with each adhesive hardening step, a long time is required for manufacturing, and efficiency is reduced. In the invention thus constituted, the solvent removal and hardening step can be performed in one iteration on ceramic adhesive hardened in multiple locations, thereby improving manufacturing efficiency.

0024 The present invention is a manufacturing apparatus for a solid oxide fuel cell apparatus in which multiple fuel cells are adhered and affixed to a first affixing member attached within a fuel cell module, comprising: a first positioning apparatus that respectively positions one end portion of each of the fuel cells relative to the fuel cell module with the one end portion of each of the fuel cells inserted into insertion holes provided on the first affixing member; a second positioning apparatus that respectively positions the other end portion of each of the fuel cells at a predetermined position relative to the fuel cell module; an adhesive application apparatus that applies ceramic adhesive onto the first affixing member with one end portion of each of the fuel cells inserted into the insertion holes of the first affixing member; and an adhesive hardening apparatus that hardens applied ceramic adhesive and affixing each of the fuel cells to the first affixing member while one end portion and the other end portion of each of the fuel cells are in a positioned state.

0025 In the invention thus constituted, one end portion and the other end portion of each fuel cell are positioned by a first and second positioning apparatus with one end portion of each fuel cell inserted into respective insertion holes. In this state, ceramic adhesive is applied onto the first affixing member by an adhesive application apparatus, and ceramic adhesive is hardened by an adhesive hardening apparatus to affix each fuel cell to the first affixing member.

0026 In the invention thus constituted, each fuel cell is directly positioned relative to the fuel cell module by a first and second positioning apparatus, without assembly as a fuel cell stack. Therefore it does not occur that a fuel cell stack in which multiple fuel cells are assembled will be incapable of attachment inside the fuel cell module. Also, multiple fuel cells, in which both end portions are positioned relative to a fuel cell module, are temporarily affixed by ceramic adhesive applied onto a first affixing member by an adhesive application apparatus, therefore assembly is not made impossible at the stage when assembly using ceramic adhesive has terminated midway.

0027 In the present invention, the other end portion of each of the fuel cell is preferably affixed by ceramic adhesive to a second affixing member with the other end portion of each of the fuel cells is inserted into the insertion holes provided in the second affixing member, wherein the first positioning apparatus positions one end portion of each of the fuel cells in such a way that an approximately uniform gap is present between one end portion of each of the fuel cells and the insertion hole in the first affixing member, and a second positioning apparatus positions the other end portion of each of the fuel cells in such a way that an approximately uniform gap is present between the other end portion of each of the fuel cells and the insertion hole in the second affixing member.

0028 In the invention thus constituted, a first positioning apparatus positions the fuel cells using the position of a first affixing member so that an approximately predetermined gap is left between one end portion of the fuel cells and the insertion holes, and a second positioning apparatus positions the fuel cells using the position of a second affixing member so that an approximately predetermined gap is left between the other end portion of the fuel cells and the insertion holes. Therefore even if there is bending due to manufacturing tolerances, the fuel cells can be reliably positioned inside the fuel cell module.

0029 Also, the present invention is a solid oxide fuel cell apparatus for generating electricity by supplying fuel and oxidant gas to fuel cells housed in a fuel cell module, comprising: a first affixing member fixed to a generating chamber of the fuel cell module and provided with multiple insertion holes; wherein one end portion of each of the fuel cells is inserted into the respective insertion holes and positioned at a predetermined position relative to the fuel cell module, separated by a predetermined gap from the edge portion of each of the insertion holes; and wherein each of the fuel cells is affixed to the first affixing member by filling the gap between each of the insertion holes and one end portion of each of the fuel cells with ceramic adhesive, and airtightness in the adhering portion between each of the fuel cells and each of the insertion hole is secured.

0030 In the invention thus constituted, one end portion of each fuel cell is inserted into a first affixing member attached to the generating chamber of the fuel cell module. Ceramic adhesive is filled into the gap between the first affixing member insertion holes and one end of the fuel cells, thereby affixing each fuel cell. I.e., each fuel cell is directly affixed to the fuel cell module without being assembled as a fuel cell stack. Accordingly it does not occur that a fuel cell stack in which multiple fuel cells are assembled will be incapable of attachment inside the fuel cell module.

0031 The present invention furthermore preferably comprises a second affixing member disposed at the other end portion of each of the fuel cells, wherein multiple insertion holes for inserting the other end portion of each of the fuel cells are formed on the second affixing member, and the second affixing member is positioned at a predetermined position relative to an inside wall surface of the generating chamber.

0032 In the invention thus constituted, the other end portion of each fuel cell is inserted in the insertion hole of the second affixing member positioned at a predetermined position relative to the inside wall surface of the generating chamber, therefore the other end portion of each fuel cell can also be positioned at a predetermined position relative to the inside wall surface of the generating chamber.

0033 In the invention the second affixing member preferably comprises an adhesive receiving section into which ceramic adhesive can be applied, wherein the second affixing member is affixed to the other end portion of each of the fuel cells by applying ceramic adhesive into the adhesive receiving section with the other end portions of the fuel cells inserted into each of the insertion holes.

0034 In the invention thus constituted, the other end portion of each fuel cell can be easily affixed by applying ceramic adhesive into the adhesive receiving section.

0035 In the present invention the second affixing member is preferably positioned by a positioning member so that a uniform gap is formed between the second affixing member and the inside wall surface of the generating chamber.

In the invention thus constituted, the second affixing member is positioned in such a way that a uniform gap is formed relative to the inside wall surface of the generating chamber, therefore the flow of oxidant gas inside the generating chamber can be made uniform, and sufficient oxidant gas can be supplied to each fuel cell.

0036 In the present invention multiple positioning members are preferably provided on the inside wall surface of the generating chamber and disposed at equal intervals.

In the invention thus constituted, multiple positioning members are provided on the inside wall surface of the generating chamber and disposed at equal intervals, so the second affixing member can be accurately positioned. By this means the applied ceramic adhesive can be uniformly dispersed, and each fuel cell reliably affixed to the second affixing member.

0037 In the present invention the second affixing member preferably constitutes a portion of an exhaust collection chamber for collecting remaining fuel which has not been used for electrical generation in each of the fuel cells.

In the invention thus constituted, the second affixing member comprises a part of the exhaust collection chamber, therefore a structure provided with an exhaust collection chamber, which is difficult to position on each fuel cell, can be easily achieved.

0038 In the present invention there is furthermore preferably a dispersion chamber bottom member, wherein the generating chamber is formed by a cylindrical generating chamber constituent member disposed to surround the multiple fuel cells; the first affixing member is attached to the inside wall surface of the generating chamber constituent member to form a fuel gas dispersion chamber for distributing supplied fuel to the multiple fuel cells; and wherein the dispersion chamber bottom member is hermetically attached to the inside wall surface of the generating chamber constituent member and forms the fuel gas dispersion chamber together with the first affixing member by filling and hardening of ceramic adhesive in a gap between the inside wall surface of the generating chamber constituent member and the dispersion chamber bottom member, the gap has a circular ring or elliptical ring shaped-cross section perpendicular to the longitudinal direction of the generating chamber constituent member.

0039 In the invention thus constituted, multiple fuel cells are housed on the inside of the generating chamber-constituent member, and an affixing member is attached to the inside wall surface of the generating chamber constituent member so as to form a fuel gas dispersion chamber for distributing fuel to these fuel cells. A dispersion chamber bottom member is attached using ceramic adhesive to the inside wall surface of a generating chamber constituent member to form a fuel gas dispersion chamber together with these generating chamber constituent members and affixing members. A circular ring or elliptical ring-shaped gap is formed between the generating chamber constituent member inside wall surface and the dispersion chamber bottom member; ceramic adhesive is filled into this gap, and the dispersion chamber bottom member is affixed in an airtight manner by the hardening of this ceramic adhesive.

0040 In the invention thus constituted, ceramic adhesive is filled into the circular ring or elliptical ring-shaped gap between the generating chamber constituent member inside wall surface and the dispersion chamber bottom member. Therefore when heated in a drying oven or the like to dry the adhesive, the part into which ceramic adhesive has been filled heats and dries in an essentially uniform manner. This enables prevention of peeling of the earlier-drying part of the ceramic adhesive from the part which dries and shrinks later, thereby suppressing the occurrence of cracking. On the other hand, when the filled part of the ceramic adhesive is rectangular, the speed of ceramic adhesive hardening differs between the corner parts and the side parts, creating a tendency for the earlier drying parts to crack. In this invention, because the ceramic adhesive filled part has a circular or elliptical ring shape, the ceramic adhesive hardens in an essentially uniform manner around the entire circumference. Also, because the volume of the ceramic adhesive shrinks upon hardening, tensile stress occurs over the entire ceramic adhesive layer during hardening, but because in the present invention the ceramic adhesive is shaped in a circular or elliptical ring, tensile stress is essentially uniformly dispersed over the entire circumference. In contrast, when the ceramic adhesive is rectangular, stress can easily concentrate in the corner parts, causing cracks to occur in these parts. Using the present invention, generating chamber constituent members and the dispersion chamber bottom member of the fuel cell module can be hermetically sealed using ceramic adhesive.

0041 The present invention furthermore preferably comprises a cylindrical exhaust passage constituent member disposed to surround the generating chamber constituent member, wherein a gap having a circular ring or elliptical ring-shaped cross section is formed perpendicular to the longitudinal direction of the generating chamber constituent member on the inside of the inner wall surface of the exhaust passage constituent member, and the exhaust passage constituent member is hermetically affixed by the filling in and hardening of the ceramic adhesive in the gap.

0042 In the invention thus constituted, ceramic adhesive is filled into the circular ring or elliptical ring-shaped gap on the inside of the exhaust passage constituent member and hardened, making it difficult for cracks to form in the filled ceramic adhesive layer, so that an exhaust passage with a high degree of airtightness can be formed using ceramic adhesive.

0043 The present invention furthermore preferably has a cylindrical supply path constituent member disposed to surround the exhaust passage constituent member; a gap with a circular ring or elliptical ring-shaped cross section is formed perpendicular to the longitudinal direction of the generating chamber constituent member, between the inside wall surface of the supply path constituent member and the exhaust passage constituent member, and the supply path constituent member is hermetically affixed by the filling in and hardening of ceramic adhesive in this gap.

0044 In the invention thus constituted, ceramic adhesive is filled into the circular ring or elliptical ring-shaped gap on the inside of the supply path constituent member and hardened, making it difficult for cracks to form in the filled ceramic adhesive layer, so that a supply path with a high degree of airtightness can be formed using ceramic adhesive.

0045 In the present invention the dispersion chamber bottom member preferably comprises an electrical conductor passage having circular or elliptical shaped cross section, for enabling the pass through of an electrical conductor for extracting power from the fuel cells, and wherein the electrical conductor is extracted in an airtight manner from the fuel gas dispersion chamber by the filling and hardening of ceramic adhesive in the electrical conductor passage.

0046 In the invention thus constituted, ceramic adhesive is filled into and hardened in an electrical conductor path with a circular ring or elliptical ring-shaped section, making it difficult for cracks to occur in the filled ceramic adhesive layer, so that ceramic adhesive can be used to secure the airtightness of the electrical conductor path.

0047 The present invention furthermore preferably comprises an exhaust collection chamber for collecting remaining fuel which has not been used for electrical generation in the multiple fuel cells, wherein the exhaust collection chamber is formed by hermetically bonding at least two members with ceramic adhesive; a gap with a circular ring or elliptical ring-shaped cross section is formed between the members forming the exhaust collection chamber, and the exhaust collection chamber is formed by the filling and hardening of ceramic adhesive in the gap.

0048 In the invention thus constituted, ceramic adhesive is filled into the circular ring or elliptical ring-shaped gap between the members forming the exhaust collection chamber and hardened, making it difficult for cracks to form in the filled ceramic adhesive layer, so that an exhaust collection chamber with a high degree of airtightness can be formed using ceramic adhesive.

0049 In the present invention it is preferable that each of the multiple fuel cells is round in cross section, and each of the fuel cells is affixed to the edge portions of multiple round insertion holes formed in the first affixing member.

0050 In the invention thus constituted, fuel cells with a circular cross section are affixed to the edge portion of circular insertion holes using ceramic adhesive, so it is difficult for cracks to form in the affixed ceramic adhesive layer, and by using ceramic adhesive, fuel cells can be sealed with a high degree of airtightness.

### Effect of the Invention

0051 Using the solid oxide fuel cell apparatus and manufacturing method and manufacturing apparatus for same of the present invention, constituent parts of a fuel cell module can be hermetically bonded using ceramic adhesive.

### Brief Description of Figures

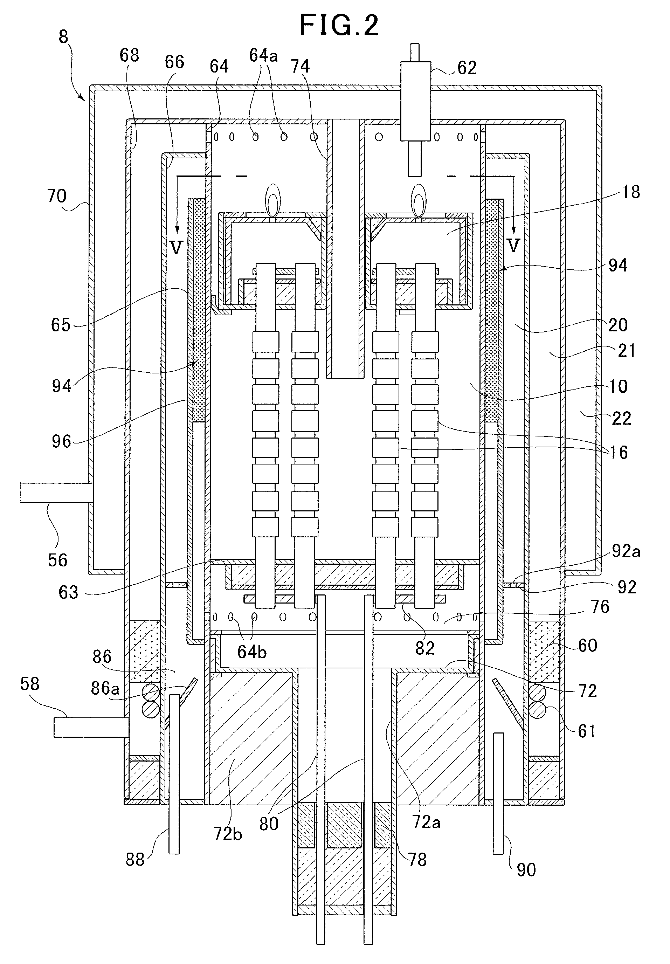

0052
Fig. 1
   An overview schematic showing a solid oxide fuel cell (SOFC) according to an embodiment of the invention.
Fig. 2
   A cross-section of a housing container for fuel cells in a solid oxide fuel cell according to an embodiment of the invention.
Fig. 3
   A cross-section showing an exploded view of the main members of a housing container for fuel cells in a solid oxide fuel cell according to an embodiment of the invention.
Fig. 4
   A cross-section showing an expanded view of an exhaust collecting chamber built into a solid oxide fuel cell according to an embodiment of the invention.
Fig. 5
   A cross section through V-V in Fig. 2.
Fig. 6
   (a) A cross-section showing an expanded view of the bottom end of fuel cells on which the bottom end is a cathode; (b) A cross-section showing an expanded view of the bottom end of fuel cells on which the bottom end is an anode.
Fig. 7
   A schematic showing a manufacturing procedure for a solid oxide fuel cell according to an embodiment of the invention.
Fig. 8
   A schematic showing a manufacturing procedure for a solid oxide fuel cell according to an embodiment of the invention.
Fig. 9
   A schematic showing a manufacturing procedure for a solid oxide fuel cell according to an embodiment of the invention.
Fig. 10
   A schematic showing a manufacturing procedure for a solid oxide fuel cell according to an embodiment of the invention.
Fig. 11
   A schematic showing a manufacturing procedure for a solid oxide fuel cell according to an embodiment of the invention.
Fig. 12
   A schematic showing a manufacturing procedure for a solid oxide fuel cell according to an embodiment of the invention.
Fig. 13
   A schematic showing a manufacturing procedure for a solid oxide fuel cell according to an embodiment of the invention.
Fig. 14
   A schematic showing a manufacturing procedure for a solid oxide fuel cell according to an embodiment of the invention.
Fig. 15
   A schematic showing a manufacturing procedure for a solid oxide fuel cell according to an embodiment of the invention.
Fig. 16
   A schematic showing a manufacturing procedure for a solid oxide fuel cell according to an embodiment of the invention.
Fig. 17
   A schematic showing a manufacturing procedure for a solid oxide fuel cell according to an embodiment of the invention.
Fig. 18
   A schematic showing a manufacturing procedure for a solid oxide fuel cell according to an embodiment of the invention.
Fig. 19
   A schematic showing a manufacturing procedure for a solid oxide fuel cell according to an embodiment of the invention.
Fig. 20
   A schematic showing a manufacturing procedure for a solid oxide fuel cell according to an embodiment of the invention.
Fig. 21
   A schematic showing a manufacturing procedure for a solid oxide fuel cell according to an embodiment of the invention.
Fig. 22
   A plan view of a cover member disposed on injected ceramic adhesive in a solid oxide fuel cell according to an embodiment of the invention.
Fig. 23
   A perspective view of a cover member disposed on injected ceramic adhesive in a solid oxide fuel cell according to an embodiment of the invention.
Fig. 24
   A flowchart showing the manufacturing procedure for a solid oxide fuel cell according to an embodiment of the invention.
Fig. 25
   A cross-section showing an expanded view of the adhering portion to a bottom piece of a fuel cell collecting chamber.
Fig. 26
   A graph illustrating an example of temperature control within a drying oven in a workable hardening step and a solvent elimination and hardening step in a solid oxide fuel cell according to an embodiment of the invention.
Fig. 27
   A photograph showing an example of adhesion of an fuel cell using ceramic adhesive in a normal adhesion method.
Fig. 28
   A diagram showing a first solvent removal and hardening step in a variant example of a solid oxide fuel cell according to an embodiment of the invention.
Fig. 29
   A diagram showing a second solvent removal and hardening step in a variant example of a solid oxide fuel cell according to an embodiment of the invention.
Fig. 30
   A diagram explaining a heating method in a second solvent elimination and hardening step.

### Embodiments of the Invention

0053 Next, referring to the attached drawings, we discuss a solid oxide fuel cell apparatus (SOFC) according to an embodiment of the present invention.

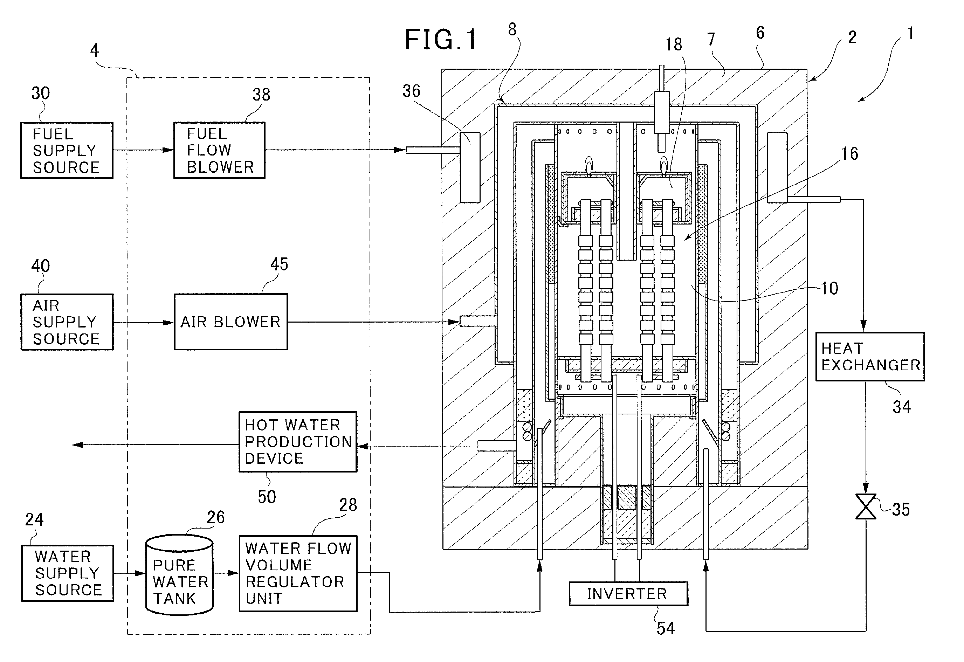

Fig. 1 is an overview diagram showing a solid oxide fuel cell (SOFC) apparatus according to an embodiment of the present invention. As shown in Fig. 1, the solid oxide fuel cell (SOFC) apparatus of this embodiment of the present invention is furnished with a fuel cell module 2 and an auxiliary unit 4.

0054 Fuel cell module 2 comprises a fuel cell housing container 8; is formed within this housing 6, mediated by thermal insulation 7. A generating chamber 10 is formed on the interior of this fuel cell housing container 8; multiple fuel cells 16 are concentrically disposed within this generating chamber 10, and the generating reaction between fuel gas and air, which is the oxidizing gas, is carried out by these fuel cells 16.

0055 An exhaust collection chamber 18 is attached to the top end of each fuel cell 16. Residual fuel (off-gas), unused for the generating reaction and remaining in each fuel cell 16, is collected in the exhaust collection chamber 18 attached to the top end and flows out of the multiple jet openings placed in the ceiling surface of exhaust collection chamber 18. Out flowing fuel is combusted in generating chamber 10 using remaining air not used for generation, thereby producing exhaust gas.

0056 Next, auxiliary unit 4 comprises pure water tank 26, which stores water from water supply source 24 and uses a filter to produce pure water, and water flow volume regulator unit 28 (a motor-driven "water pump" or the like), being a water supply apparatus, which regulates the flow volume of water supplied from this pure water tank. Also, auxiliary unit 4 comprises a fuel blower 38 (a motor-driven "fuel pump" or the like), being a fuel supply apparatus, for regulating the flow volume of hydrocarbon raw fuel gas supplied from fuel supply source 30, such as municipal gas.

0057 Note that raw fuel gas which is passed through fuel blower 38 is introduced into the interior of fuel cell housing container 8 through the desulfurizer 36, heat exchanger 34, and electromagnetic valve 35 in fuel cell module 2. The desulfurizer 36 is disposed in a ring shape around fuel cell housing container 8, and operates to remove sulfur from raw fuel gas. Heat exchanger 34 is provided to prevent degradation of electromagnetic valve 35 when high-temperature raw fuel gas heated in desulfurizer 36 flows directly into electromagnetic valve 35. Electromagnetic valve 35 is provided in order to stop the supply of raw fuel gas into fuel cell housing container 8.

0058 Auxiliary unit 4 comprises a generating air flow regulator unit 45 (a motor driven "air blower" or the like), being an oxidant gas supply apparatus, for regulating the flow volume of air supplied from air supply source 40.

0059 In addition, auxiliary unit 4 is equipped with a hot water production device 50 for recovering the heat in exhaust gas from fuel cell module 2. Tap water is supplied to hot water production device 50; this tap water is converted to hot water by the heat from exhaust gas, and is supplied to an external hot water tank, not show.

In addition, connected to fuel cell module 2 is an inverter 54, being a power extraction section (power conversion section) for supplying electricity generated by fuel cell module 2 to the outside.

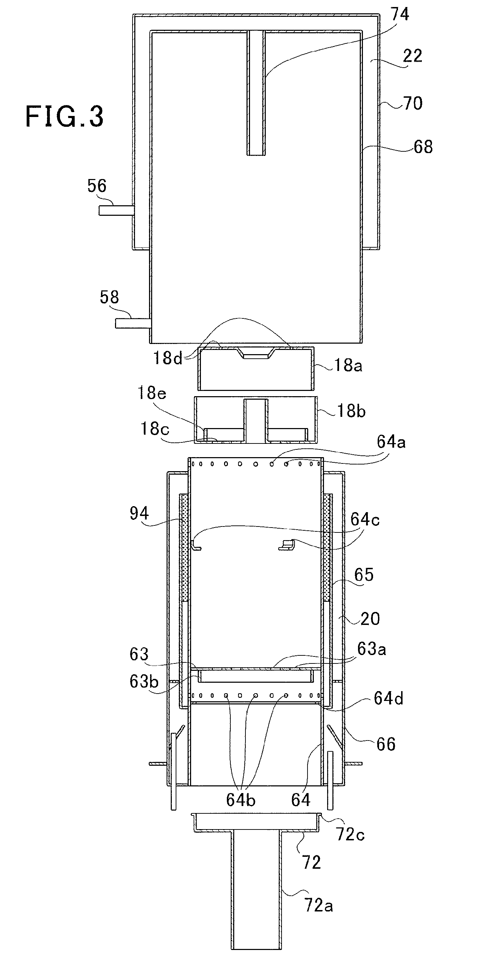

0060 Next, referring to Figs. 2 and 3, we explain the internal structure of a fuel cell housing container built into the fuel cell module of a solid oxide fuel cell (SOFC) according to an embodiment of the invention. Fig. 2 is a cross-section of a fuel cell housing container, and Fig. 3 is a cross-section showing exploded view of main members of a fuel cell housing container.

As shown in Fig. 2, multiple fuel cells 16 are concentrically arrayed in the space within fuel cell housing container 8, and fuel gas supply flow path 20, exhaust gas discharge flow path 21, and oxidant gas supply flow path 22 are concentrically arranged in that order so as to surround the periphery thereof. Here, exhaust gas discharge flow path 21 and oxidant gas supply flow path 22 function as an oxidant gas flow path for supplying/discharging oxidant gas.

0061 First, as shown in Fig. 2, fuel cell housing container 8 is an approximately cylindrical steel container, to the side surface of which are connected a oxidant gas introducing pipe 56, being an oxidant gas introduction port for supplying generating air, and exhaust gas exhaust pipe 58 for discharging exhaust gas. In addition, an ignition heater 62 for igniting residual fuel flowing out from exhaust collection chamber 18 protrudes from the top in surface of fuel cell housing container 8.

0062 As shown in Figs. 2 and 3, within fuel cell housing container 8, inside cylindrical member 64, external cylindrical member 66, inside cylindrical container 68, and external cylindrical container 70, being constituent members of the generating chamber, are disposed in that order starting from the inside so as to surround the periphery of exhaust collection chamber 18. The above-described fuel gas supply flow path 20, exhaust gas discharge flow path 21, and oxidant gas supply flow path 22 respectively constitute flow path between the cylindrical members and cylindrical containers, wherein heat exchange is carried out between adjacent flow paths. I.e., exhaust gas discharge flow path 21 is disposed so as to surround fuel gas supply flow path 20, and oxidant gas supply flow path 22 is disposed so as to surround exhaust gas discharge flow path 21. The open space at the bottom end of fuel cell housing container 8 is blocked off by dispersion chamber bottom member 72, which forms the bottom surface of fuel gas dispersion chamber 76 for dispersing fuel into each fuel cell 16.

0063 The inside cylindrical member 64 is an approximately cylindrical hollow body, the top and bottom ends of which are open. First affixing member 63, being a dispersion chamber-forming plate, is welded in an airtight manner to the interior wall surface of inside cylindrical member 64. A fuel gas dispersion chamber 76 is defined by the bottom surface of this first affixing member 63, the inside wall surface of inside cylindrical member 64, and the top surface of dispersion chamber bottom member 72. Multiple insertion holes 63a, into which fuel cells 16 are inserted, are formed on first affixing member 63, and each fuel cell 16 is adhered to first affixing member 63 by ceramic adhesive, with the fuel cells 16 inserted into each of the insertion holes 63a. Thus in a solid oxide fuel cell apparatus 1 of the embodiment, ceramic adhesive is filled into the mutual joining portions between members constituting fuel cell module 2, and with hardening, each of the members is mutually joined in an airtight manner.

0064 External cylindrical member 66 is a cylindrical pipe disposed on the periphery of inside cylindrical member 64, formed in an approximately analogous shape to inside cylindrical member 64 so that a ring-shaped flow path is formed between external cylindrical member 66 and inside cylindrical member 64. In addition, an intermediate cylindrical member 65 is disposed between inside cylindrical member 64 and external cylindrical member 66. Intermediate cylindrical member 65 is a cylindrical pipe disposed between inside cylindrical member 64 and external cylindrical member 66, and a reforming section 94 is constituted between the outside circumferential surface of inside cylindrical member 64 and the inside circumferential surface of intermediate cylindrical member 65. Also, the ring-shaped space between the outer circumferential surface of intermediate cylindrical member 65 and the inner circumferential surface of external cylindrical member 66 functions as a fuel gas supply flow path 20. Therefore reforming section 94 and fuel gas supply flow path 20 receive the heat from combustion of residual fuel at the top end of exhaust collection chamber 18 in the fuel cells 16. The top end of inside cylindrical member 64 and top end of external cylindrical member 66 are joined in an airtight manner by welding, while the top end of fuel gas supply flow path 20 is closed off. Also, the bottom end of intermediate cylindrical member 65 and the outer peripheral surface of inside cylindrical member 64 are joined in an airtight manner by welding.

0065 Inside cylindrical container 68 is a cup-shaped member with a circular cross section disposed on the periphery of external cylindrical member 66, the side surface of which is formed in an approximately analogous shape to external cylindrical member 66, so that a ring-shaped flow path of an essentially fixed width is formed between inside cylindrical container 68 and external cylindrical member 66. This inside cylindrical container 68 is disposed so as to cover the open portion at the top end of inside cylindrical member 64. The ring-shaped space between the outer circumferential surface of external cylindrical member 66 and the inner circumferential surface of inside cylindrical container 68 functions as exhaust gas discharge flow path 21 (Fig. 2). This exhaust gas discharge flow path 21 communicates with the space on the inside of inside cylindrical member 64 through multiple small holes 64a provided on the top in surface of inside cylindrical member 64. An exhaust gas exhaust pipe 58, being an exhaust gas outflow opening, is connected to the bottom surface of inside cylindrical container 68, and exhaust gas discharge flow path 21 communicates with exhaust gas exhaust pipe 58.

0066 A combustion catalyst 60 and sheath heater 61 for heating same is disposed at the bottom portion of exhaust gas discharge flow path 21.

Combustion catalyst 60 is a catalyst filled into the ring-shaped space between the outer circumferential surface of external cylindrical member 66 and the inner circumferential surface of inside cylindrical container 68, above exhaust gas exhaust pipe 58. By passing through combustion catalyst 60, carbon monoxide is removed from exhaust gas descending the exhaust gas discharge flow path 21 and discharged from exhaust gas exhaust pipe 58.

Sheath heater 61 using electrical heater attached so as to surround the outer circumferential surface of external cylindrical member 66 underneath combustion catalyst 60. When solid oxide fuel cell apparatus 1 is started, combustion catalyst 60 is heated to an activation temperature by turning on electricity to sheath heater 61.

0067 External cylindrical container 70 is a cup-shaped member with a circular cross section disposed on the periphery of inside cylindrical container 68, the side surface of which is formed in an approximately analogous shape to inside cylindrical container 68, so that a ring-shaped flow path of an essentially fixed width is formed between external cylindrical container 70 and inside cylindrical container 68. The ring-shaped space between the outer circumferential surface of inside cylindrical container 68 and the inner circumferential surface of external cylindrical container 70 functions as oxidant gas supply flow path 22. Oxidant gas introducing pipe 56 is connected to the bottom end surface of external cylindrical container 70, and oxidant gas supply flow path 22 communicates with oxidant gas introducing pipe 56.

0068 Dispersion chamber bottom member 72 is an approximately plate-shaped member, affixed in an airtight manner with ceramic adhesive to the inside wall surface of inside cylindrical member 64. A fuel gas dispersion chamber 76 is thus constituted between first affixing member 63 and dispersion chamber bottom member 72. Also, insertion pipe 72a for the insertion of bus bars 80 (Fig. 2) is provided at the center of dispersion chamber bottom member 72. Bus bars 80, electrically connected to each fuel cell 16, are drawn out to the outside of fuel cell housing container 8 through this insertion pipe 72a. Ceramic adhesive is filled into insertion pipe 72a, thereby securing the airtightness of exhaust gas collection chamber 78. In addition, thermal insulation 72b (Fig. 2) is disposed around the periphery of insertion pipe 72a.

0069 A circular cross section oxidant gas jetting pipe 74 for jetting generating air is attached so as to hang down from the ceiling surface of inside cylindrical container 68. This oxidant gas jetting pipe 74 the extends in the vertical direction on the center axial line of inside cylindrical container 68, and each fuel cell 16 is disposed on concentric circles around oxidant gas jetting pipe 74. By attaching the top end of oxidant gas jetting pipe 74 to the ceiling surface of inside cylindrical container 68, oxidant gas supply flow path 22, formed between inside cylindrical container 68 and external cylindrical container 70, is made to communicate with oxidant gas jetting pipe 74. Air supplied via oxidant gas supply flow path 22 is jetted downward from the tip of oxidant gas jetting pipe 74, hitting the top surface of first affixing member 63 and spreading to the entire interior of generating chamber 10.

0070 Fuel gas dispersion chamber 76 is a cylindrical airtight chamber, constituted between first affixing member 63 and dispersion chamber bottom member 72, on the top surface of which each fuel cell 16 is closely arrayed. The inside fuel electrode of each fuel cell 16 attached to the top surface of first affixing member 63 communicates with the interior of fuel gas dispersion chamber 76. The bottom end of each fuel cell 16 penetrates the insertion holes 63a in first affixing member 63 and protrudes into fuel gas dispersion chamber 76, so that each fuel cell 16 is affixed by adhesion to first affixing member 63.

0071 As shown in Fig. 2, multiple small holes 64b are formed in inside cylindrical member 64 below first affixing member 63. The space between the outer perimeter of inside cylindrical member 64 and the inner perimeter of intermediate cylindrical member 65 communicates with the inside of fuel gas dispersion chamber 76 through multiple small holes 64b. Supplied fuel first rises through the space between the inside perimeter of external cylindrical member 66 and the outside perimeter of intermediate cylindrical member 65, then descends through the space between the outside perimeter of inside cylindrical member 64 and the inside perimeter of intermediate cylindrical member 65, flowing into fuel gas dispersion chamber 76 through the multiple small holes 64b. Fuel gas which has flowed into fuel gas dispersion chamber 76 is distributed to each fuel cell 16 attached to the ceiling surface of fuel gas dispersion chamber 76 (first affixing member 63).

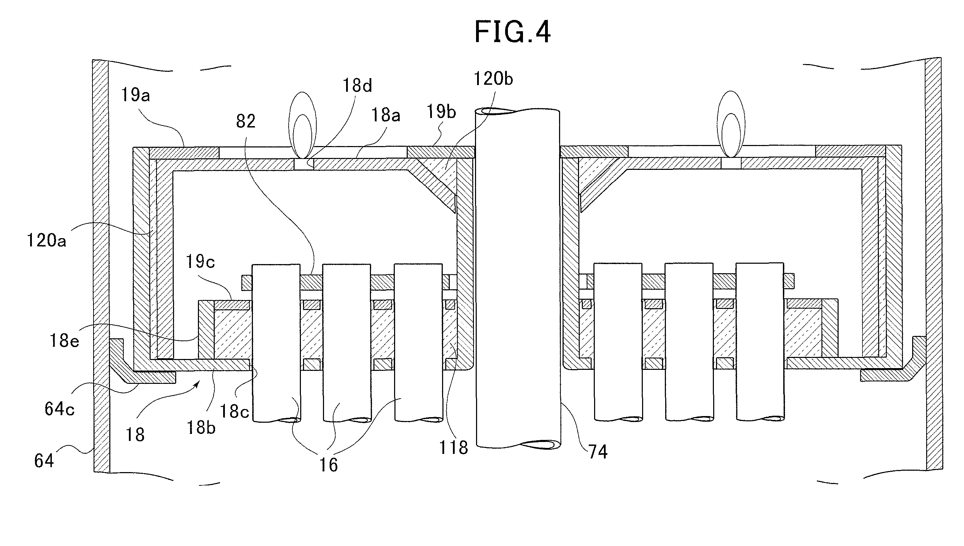

0072 In addition, the bottom ends of each fuel cell 16 protruding into fuel gas dispersion chamber 76 are electrically connected to bus bars 80 inside fuel gas dispersion chamber 76, and electoral power is extracted to the outside through insertion pipe 72a. Bus bars 80 are elongated metal conductors for extracting power produced by each fuel cell 16 to the outside of fuel cell housing container 8, affixed to dispersion chamber bottom member 72 insertion pipe 72a through insulator 78. Bus bars 80 are electrically connected to a power collector 82 attached to each fuel cell 16 on the interior of fuel gas dispersion chamber 76. Bus bars 80 are connected to inverter 54 (Fig. 1) on the exterior of fuel cell housing container 8. Note that power collector 82 is also attached to the top and portions of each fuel cell 16 protruding into exhaust collection chamber 18 (Fig. 4). Multiple fuel cells 16 are electrically connected in parallel by these top and bottom end electrical power collectors 82, and multiple sets of parallel-connected fuel cells 16 are electrically connected in series, and both ends of these series connections are connected to the respective bus bars 80.

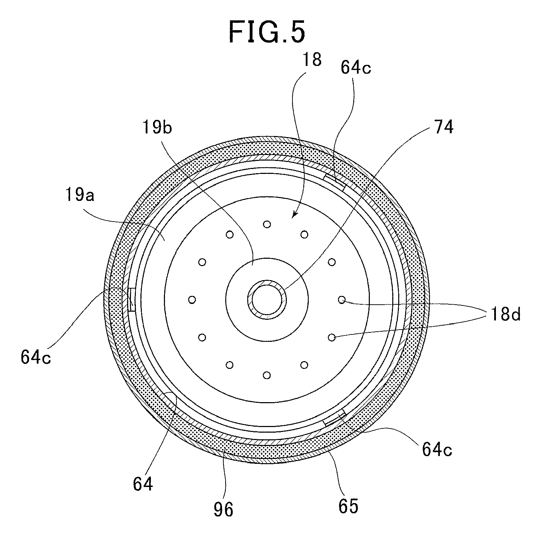

0073 Next, referring to Figs. 4 and 5, we explain the constitution of the exhaust collection chamber.

Fig. 4 is a cross-section showing an expanded view of part of the exhaust collection chamber, and Fig. 5 is a cross-section through V-V in Fig. 2.

As shown in Fig. 4, exhaust collection chamber 18 is a chamber with a doughnut-shaped cross-section attached to the top end of each fuel cell 16; oxidant gas jetting pipe 74 penetrates and extends at the center of this exhaust collection chamber 18.

0074 As shown in Fig. 5, three stays 64c are attached at equal spacing to the inside wall surface of inside cylindrical member 64 to support exhaust collection chamber 18. As shown in Fig. 4, stays 64c are small tabs of bent thin metal plate; by mounting exhaust collection chamber 18 on each of the stays 64c, exhaust collection chamber 18 is positioned concentrically with inside cylindrical member 64. Thus the gap between the outside circumferential surface of exhaust collection chamber 18 and the inside circumferential surface of inside cylindrical member 64, and the gap between the inside circumferential surface of exhaust collection chamber 18 and the outside circumferential surface of oxidant gas jetting pipe 74 are made uniform around the entire circumference (Fig. 5).

0075 Exhaust collection chamber 18 is constituted by joining collection chamber upper member 18a and collection chamber lower member 18b in an airtight manner.

Collection chamber lower member 18b is a round plate shaped member open at the top, at the center of which a cylindrical portion is provided to permit the penetration of oxidant gas jetting pipe 74.

Collection chamber upper member 18a is a round plate shaped member open at the bottom, at the center of which an opening is provided to permit the penetration of oxidant gas jetting pipe 74. Collection chamber upper member 18a has a shape capable of insertion into the doughnut shaped cross-sectional region which opens at the top of collection chamber lower member 18b.

0076 Ceramic adhesive is filled into and hardened in the gap between the inner circumferential surface of the wall surrounding collection chamber lower member 18b and the outer circumferential surface of collection chamber upper member 18a, assuring airtightness in this joining portion. A large diameter seal 19a is disposed on the ceramic adhesive layer formed by the ceramic adhesive filled into this joint portion, covering the ceramic adhesive layer. The large diameter seal 19a is a ring-shaped thin plate, disposed to cover the filled-in ceramic adhesive layer after the ceramic adhesive is filled, and affixed to exhaust collection chamber 18 by the hardening of the adhesive.

0077 On the other hand, ceramic adhesive is also filled in and hardened between the outside circumferential surface of the cylindrical portion at the center of collection chamber lower member 18b and the edge of the opening portion at the center of collection chamber upper member 18a, assuring the airtightness of this joint portion. A small diameter seal 19b is disposed on the ceramic adhesive layer formed by the ceramic adhesive filled into this joint portion, covering the ceramic adhesive layer. The small diameter seal 19b is a ring-shaped thin plate, disposed to cover the filled-in ceramic adhesive layer after the ceramic adhesive is filled, and affixed to exhaust collection chamber 18 by the hardening of the adhesive.

0078 Multiple insertion holes 18c are formed on the bottom surface of collection chamber lower member 18b. The top ends of each fuel cell 16 respectively penetrate each of the insertion holes 18c, and each fuel cell 16 penetrate each of the insertion holes 18c. Ceramic adhesive is flowed onto the bottom surface of collection chamber lower member 18b, which is penetrated by fuel cells 16; hardening of the adhesive fills in the gap between the outer perimeter of each fuel cell 16 and the insertion holes 18c in an airtight manner and results in the affixing of each fuel cell 16 to collection chamber lower member 18b.

0079 Furthermore, round, thin plate cover member 19c is disposed on the ceramic adhesive flowed into the bottom surface of collection chamber lower member 18b and affixed to collection chamber lower member 18b by the hardening of the ceramic adhesive. Multiple insertion holes are formed in cover member 19c at the same positions as each of the insertion holes 18c in collection chamber lower member 18b, and the top end of each fuel cell 16 penetrate and extend through these ceramic adhesive layer and cover member 19c.

0080 At the same time, multiple jet openings 18d for jetting collected fuel gas are formed in the ceiling surface of exhaust collection chamber 18 (Fig. 5). Each of the jet openings 18d is disposed in a circle on collection chamber upper member 18a. Fuel remaining unused for electrical generation flows out from the top end of each fuel cell 16 into exhaust collection chamber 18, and fuel collected inside exhaust collection chamber 18 flows out from jet openings 18d, where it is combusted.

0081 Next, referring to Fig. 2, we explain the structure for reforming raw fuel gas supplied from fuel supply source 30.

First, vaporization section 86 for vaporizing water for use in steam reforming is provided at the bottom portion of fuel gas supply flow path 20 formed between inside cylindrical member 64 and external cylindrical member 66. Vaporization section 86 comprises ring-shaped inclined plate 86a attached to the lower inside perimeter of external cylindrical member 66, and fuel gas flow path 88. Also, vaporization section 86 is disposed below oxidant gas introducing pipe 56 for introducing generating air, and above exhaust gas exhaust pipe 58 for discharging exhaust gas. Ring-shaped inclined plate 86a is a metal thin plate formed a ring shape, the outer circumferential edge of which is attached to the inside wall surface of external cylindrical member 66. At the same time, the inside perimeter edge of ring-shaped inclined plate 86a is positioned above the outside perimeter edge thereof, and a gap is provided between the inside perimeter edge of inclined plate 86a and the outside wall surface of inside cylindrical member 64.

0082 Water supply pipe 88 is a pipe extending vertically within fuel gas supply flow path 20 from the bottom end of inside cylindrical member 64; water for steam reforming supplied from water flow volume regulator unit 28 is supplied to vaporization section 86 through water supply pipe 88. The top end of water supply pipe 88 extends to the top surface side of inclined plate 86a, penetrating inclined plate 86a, and water supplied to the top surface side of inclined plate 86a pools between the top surface of inclined plate 86a and the inside wall surface of external cylindrical member 66. Water supplied to the top surface of inclined plate 86a is vaporized there, producing steam.

0083 A combustion gas introducing portion for introducing raw fuel gas into fuel gas supply flow path 20 is erected under vaporization section 86. Raw fuel gas fed from fuel blower 38 is introduced into fuel gas supply flow path 20 through fuel gas supply pipe 90. Fuel gas supply pipe 90 is a type extending vertically inside fuel gas supply flow path 20 from the bottom end of inside cylindrical member 64. The top end of fuel gas supply pipe 90 is positioned beneath inclined plate 86a. Raw fuel gas fed from fuel blower 38 is introduced at the bottom side of inclined plate 86a and rises to the top side of inclined plate 86a as its flow path is restricted by the slope of inclined plate 86a. Raw fuel gas rising to the top side of inclined plate 86a rises together with the steam produced by vaporization section 86.

0084 A fuel gas supply flow path partition 92 is erected above vaporization section 86 in fuel gas supply flow path 20. Fuel gas supply flow path partition 92 is a ring-shaped metal plate disposed to separate into top and bottom portions the ring-shaped space between the inside perimeter of external cylindrical member 66 and the outside perimeter of intermediate cylindrical member 65. Multiple equally spaced jet openings 92a are provided in a circle on fuel gas supply flow path partition 92, and the spaces above and below fuel gas supply flow path partition 92 communicate through these jet openings 92a. Raw fuel gas introduced from fuel gas supply pipe 90 and steam produced by vaporization section 86 are first pooled in the space on the bottom side of fuel gas supply flow path partition 92, then passed through each of the jet openings 92a and jetted into the space on the top side of fuel gas supply flow path partition 92. When jetted into the wide space on the top side of fuel gas supply flow path partition 92 from each of the jet openings 92a, the raw fuel gas and steam suddenly decelerate and sufficiently mix here.

0085 In addition, a reforming section 94 is erected on the top portion of the ring shaped space between the inside perimeter of intermediate cylindrical member 65 and the outside perimeter of inside cylindrical member 64. Reforming section 94 is disposed so as to surround the top portion of each fuel cell 16 and the perimeter of the exhaust collection chamber 18 at the top thereof. Reforming section 94 comprises a catalyst holding plate (not shown) attached to the outer wall surface of inside cylindrical member 64, and a reforming catalyst 96 held in place thereby.

0086 Thus when raw fuel gas and steam, mixed in the space over fuel gas supply flow path partition 92, makes contact with the reforming catalyst 96 filled into reforming section 94, the steam reforming reaction shown by Eq. (1) proceeds inside reforming section 94.

CₘHₙ + xH₂O→aCO₂ + bCO₂ + cH₂ (1)

0087 Fuel gas reformed in reforming section 94 flows downward in the space between the inside perimeter of intermediate cylindrical member 65 and the outside perimeter of inside cylindrical member 64, flowing into fuel gas dispersion chamber 76 to be supplied to each fuel cell 16. The steam reforming reaction is an endothermic reaction, however the heat required for the reaction is supplied by the combustion heat of off-gas flowing out from exhaust collection chamber 18 and the emitted heat produced in each fuel cell 16.

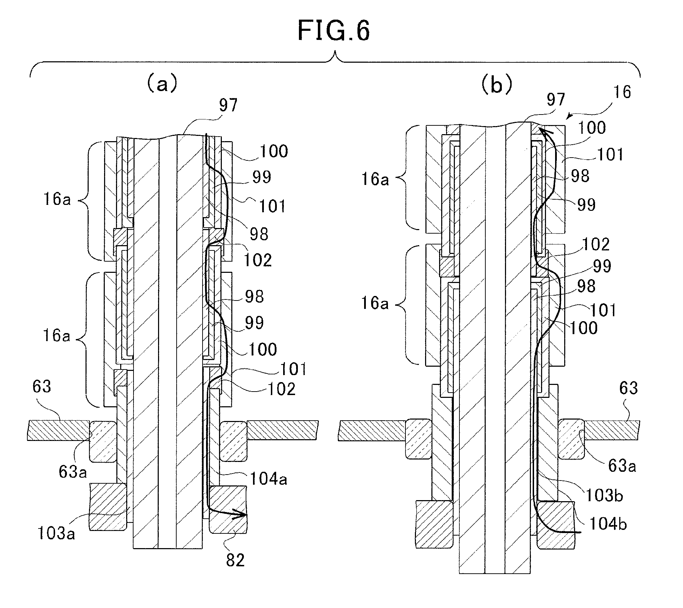

0088 Next, referring to Fig. 6, we explain fuel cells 16.

In the solid oxide fuel cell apparatus 1 of the embodiment, cylindrical crossbar cells using solid oxides are adopted as the fuel cells 16. Multiple single cells 16a are arranged in crossbar form on each fuel cell 16, and an fuel cell 16 is constituted by electrically connecting these together in series. Each fuel cell 16 comprises an anode (positive electrode) at one end and a cathode (negative electrode) at the other end; of the multiple fuel cells 16, half are disposed so that the top end is an anode and the bottom end is a cathode, and the other half are disposed so that the top end is a cathode and the bottom end is an anode.

0089 Fig. 6 (a) is a cross-section showing an expanded view of the bottom end of fuel cells 16 on which the bottom end is a cathode; (b) is a cross-section showing an expanded view of the bottom end of fuel cells 16 on which the bottom end is an anode.

0090 As shown in Fig. 6, fuel cells 16 are formed from elongated, cylindrical porous support body 97, and multiple layers formed in a crossbar shape on the outside of this porous support body 97. Respectively formed in a crossbar shape surrounding porous support body 97 in the following order, starting from the inside, are: fuel electrode 98, reaction suppression layer 99, solid electrolyte layer 100, and air electrode 101. Therefore fuel gas supplied via fuel gas dispersion chamber 76 flows into the porous support body 97 of each fuel cell 16, and air jetted from oxidant gas jetting pipe 74 flows to the outside of air electrode 101. Each of the single cells 16a formed at the top of fuel cells 16 comprises a set made up of a fuel electrode 98, reaction suppression layer 99, solid electrolyte layer 100, and air electrode 101. The fuel electrode 98 in one single cell 16a is electrically connected to the air electrode 101 of the adjacent single cell 16a through interconnector layer 102. By this means, the multiple single cells 16a formed on a single fuel cell 16 are electrically connected in series.

0091 As shown in Fig. 6(a), at the cathode-side and portion of fuel cells 16, an electrode layer 103a is formed on the outer perimeter of porous support body 97, and a lead film layer 104a is formed on the outside of this electrode layer 103a. In the cathode-side end, the air electrode 101 and electrode layer 103a of single cells 16a positioned at the end are electrically connected by interconnector layer 102. This electrode layer 103a and lead film layer 104a are formed to penetrate first affixing member 63 at the end of fuel cells 16, and protrude further downward than first affixing member 63. Electrode layer 103a is formed further down than lead film layer 104a, and externally exposed power collector 82 is electrically connected to electrode layer 103a. Thus air electrode 101 of single cell 16a positioned at the end is connected to power collector 82 through interconnector layer 102 and electrode layer 103a, and electrical current flows as shown by the arrow in the diagram. Ceramic adhesive is filled into the gap between the edge of the insertion holes 63a on first affixing member 63 and lead film layer 104a, and fuel cells 16 are affixed to first affixing member 63 on the outer circumference of lead film layer 104a.

0092 As shown in Fig. 6(b), on the fuel cell 16 anode side end, a fuel electrode layer 98 in single cell 16a positioned at the end extends, and the extended portion of fuel electrode 98 functions as an electrode layer 103b. Lead film layer 104b is formed on the outside of electrode layer 103b. This electrode layer 103b and lead film layer 104b are formed to penetrate first affixing member 63 at the end of fuel cells 16, and protrude further downward than first affixing member 63. Electrode layer 103b is formed further down than lead film layer 104b, and externally exposed power collector 82 is electrically connected to electrode layer 103b. Thus the fuel electrode 98 of single cell 16a positioned at the end is connected to power collector 82 through integrally formed electrode layer 103b, and electrical current flows as shown by the arrow in the diagram. Ceramic adhesive is filled into the gap between the edge of the insertion holes 63a on first affixing member 63 and lead film layer 104b, and fuel cells 16 are affixed to first affixing member 63 on the outer circumference of lead film layer 104b.

0093 In Fig. 6 (a) and (b) we explained the constitution of the bottom and portion of each fuel cell 16; the top and portion of each fuel cell 16 is the same. Note that at the top end each fuel cell 16 is affixed to the collection chamber lower member 18b of exhaust collection chamber 18; the structure of the affixing part is the same as affixing to the first affixing member 63 at the bottom end.

0094 Next we explain the constitution of porous support body 97, and of each layer.

The porous support body 97 in the embodiment is formed by extruding and sintering a mixture of forsterite powder and the binder.

In the embodiment, fuel electrode 98 is an electrically conductive thin film comprised of a mixture of NiO powder and 10YSZ (10mol% Y₂O₃ - 90mol% ZrO₂) powder.

0095 In the embodiment, reaction suppression layer 99 is a thin film comprising cerium compound oxide (LDC 40; i.e., 40 mol% La₂O₃ - 60 mol% CeO₂) or the like, by which chemical reactions between fuel electrode 98 and solid electrolyte layer 100 are suppressed. I.e., it is a thin film constituted of 40mol% La₂O₃ -60mol% CeO₂.

In the embodiment, solid electrolyte layer 100 is a thin film comprising an LSGM powder composition of La.₀₉ Sr_{0.1} Ga_{0.8} Mg_{0.2} O₃. Electrical energy is produced by the reaction between oxide ions and hydrogen or carbon monoxide through this solid electrolyte layer 100.

0096 In the embodiment, air electrode 101 is an electrically conductive thin film comprising a powder composition of La_{0.6} Sr_{0.4} Co_{0.8} Fe_{0.2} O₃.

In the embodiment, interconnector layer 102 is an electrically conductive thin film comprising SLT (lanthanum doped strontium titanate). Adjacent single cells 16a on fuel cells 16 are connected via interconnector layer 102.

In the embodiment, electrode layers 103a and 103b are formed of the same material as fuel electrode 98.

In the embodiment, lead film layers 104a and 104b are formed of the same material as solid electrolyte layer 100.

0097 Next, referring to Figs. 1 and 2, we discuss the operation of solid oxide fuel cell apparatus 1.

First, in the startup procedure of solid oxide fuel cell apparatus 1, fuel blower 38 is started, and power to the sheath heater 61 is started at the same time as the supply of fuel is started. By starting the power to sheath heater 61, the combustion catalyst 60 disposed above sheath heater 61 is heated, and vaporization section 86 disposed on the inside thereof is also heated. Fuel supplied by fuel blower 38 flows from fuel gas supply pipe 90 via desulfurizer 36, heat exchanger 34, and electromagnetic valve 35 into the interior of fuel cell housing container 8. In-flowing fuel, after rising up to the top end within fuel gas supply flow path 20, drops down within reforming section 94, then through small holes 64b placed on the bottom portion of inside cylindrical member 64, and into fuel gas dispersion chamber 76. Note that immediately after the of solid oxide fuel cell apparatus 1 startup procedure, because the temperature of reforming catalyst 96 in reforming section 94 has not risen sufficiently, no fuel reforming is performed.

0098 Fuel gas which has flowed into fuel gas dispersion chamber 76 flows through the inside (the fuel electrode side) of each of the fuel cells 16 attached to first affixing member 63 of fuel gas dispersion chamber 76 and into exhaust collection chamber 18. Note that immediately after startup of solid oxide fuel cell apparatus 1, the temperature of each of the solid oxide fuel cell apparatus 1 has not risen sufficiently, or power is not being extracted to inverter 54, therefore no electrical generating reaction is occurring.

0099 Fuel flowing into exhaust collection chamber 18 is jetted from exhaust collection chamber 18 jet openings 18d. Fuel jetted from jet openings 18d is ignited by ignition heater 62 and combusted. Reforming section 94, disposed around exhaust collection chamber 18, is heated by this combustion. Exhaust gas produced by combustion flows into exhaust gas discharge flow path 21 through small holes 64a formed in the top portion of inside cylindrical member 64. High temperature exhaust gas descends the interior of exhaust gas discharge flow path 21, heating fuel flowing in the fuel gas supply flow path 20 disposed on the inside thereof and generating air flowing in the oxidant gas supply flow path 22 disposed on the outside thereof. In addition, exhaust gas passes through the combustion catalyst 60 disposed within exhaust gas discharge flow path 21, whereby carbon monoxide is removed, then passes through exhaust gas exhaust pipe 58 to be discharged from fuel cell housing container 8.

0100 When vaporization section 86 is heated by exhaust gas and sheath heater 61, water for steam reforming supplied to vaporization section 86 is vaporized and steam is produced. Water for steam reforming is supplied by water flow volume regulator unit 28 to vaporization section 86 in fuel cell housing container 8 via water supply pipe 88. When steam is produced by vaporization section 86, fuel supplied through fuel gas supply pipe 90 is first held in the space on the bottom side of fuel gas supply flow path partition 92 inside fuel gas supply flow path 20, then jetted from multiple jet openings 92a formed in fuel gas supply flow path partition 92. Fuel and steam jetted with high force from jet openings 92a are well blended by being decelerated in the space on the top side of fuel gas supply flow path partition 92.

0101 Blended fuel and steam rise up within fuel gas supply flow path 20 and flow into reforming section 94. In a state whereby the reforming section 94 reforming catalyst 96 has risen to a temperature at which reforming is possible, a steam reforming reaction occurs when the mixed gas of fuel and steam passes through reforming section 94, and the mixed gas is reformed into a hydrogen-rich fuel. Reformed fuel passes through small holes 64b and flows into fuel gas dispersion chamber 76. A large number of small holes 64b are formed around fuel gas dispersion chamber 76, and sufficient capacity is thus assured for fuel gas dispersion chamber 76, therefore reformed fuel flows in uniformly to the fuel cells 16 with which it collides in the fuel gas dispersion chamber 76.

0102 At the same time air, which is the oxidant gas supplied by generating air flow regulator unit 45, flows into oxidant gas supply flow path 22 via oxidant gas introducing pipe 56. Air flowing into oxidant gas supply flow path 22 rises up in oxidant gas supply flow path 22 as it is heated by the exhaust gas flowing on the inside thereof. Air rising in oxidant gas supply flow path 22 is gathered at the center of the top end in fuel cell housing container 8 and flows into the oxidant gas jetting pipe 74 which communicates with oxidant gas supply flow path 22. Air flowing into oxidant gas jetting pipe 74 is jetted from the bottom end thereof into generating chamber 10; the jetted air then hits the top surface of first affixing member 63 and spreads throughout the entire generating chamber 10. Air flowing into generating chamber 10 rises up through the gap between the outer perimeter wall of exhaust collection chamber 18 and the inner perimeter wall of inside cylindrical member 64, and through the gap between the inside perimeter wall of exhaust collection chamber 18 and the outside circumferential surface of oxidant gas jetting pipe 74.

0103 At this point, a portion of the air passing over the exteriors (air electrode side) of each fuel cell 16 is used for the generating reaction. In addition, a portion of the air rising above exhaust collection chamber 18 is used to combust the fuel jetted from exhaust collection chamber 18 jet openings 18d. Exhaust gas produced by combustion and air not used for electrical generation or combustion passes through small holes 64a and flows into exhaust gas discharge flow path 21. Exhaust gas and air flowing into exhaust gas discharge flow path 21 is discharged after carbon monoxide is removed by combustion catalyst 60.

0104 Thus when each fuel cell 16 rises to approximately 650°C at which generation is possible, and reformed fuel flows into the interior (fuel electrode side) of each fuel cell 16 and air flows on the outside (air electrode side) thereof, a starting power is generated by chemical reaction. In this state, when inverter 54 is connected to bus bars 80 drawn out from fuel cell housing container 8, power is extracted from each fuel cell 16 and electrical generation is implemented.

0105 In solid oxide fuel cell apparatus 1 of the embodiment, generating air is jetted from the oxidant gas jetting pipe 74 disposed at the center of generating chamber 10 and rises up through generating chamber 10 in the uniform gap between exhaust collection chamber 18 and inside cylindrical member 64 and in the uniform gap between exhaust collection chamber 18 and oxidant gas jetting pipe 74. Therefore the flow of air inside generating chamber 10 is an essentially completely axially symmetrical flow, and air flows homogeneously around each fuel cell 16. Temperature differences between fuel cells 16 are thereby suppressed, and a uniform starting power can be produced by each fuel cell 16.

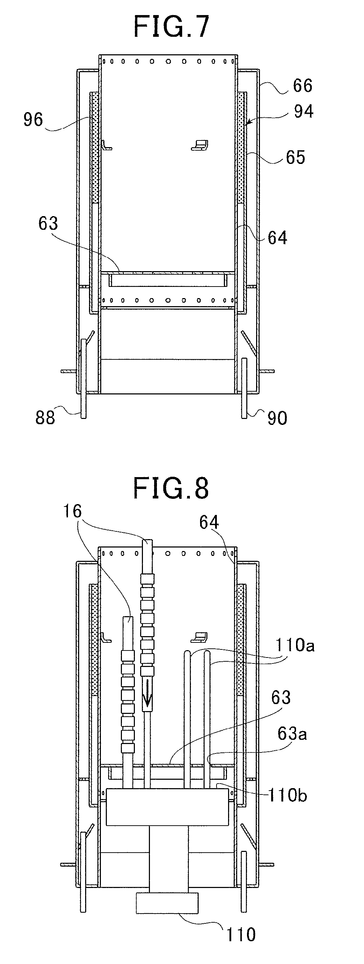

0106 Next, referring to Figs. 7 through 26, we explain a method for manufacturing solid oxide fuel cell apparatus 1 according to an embodiment of the invention.

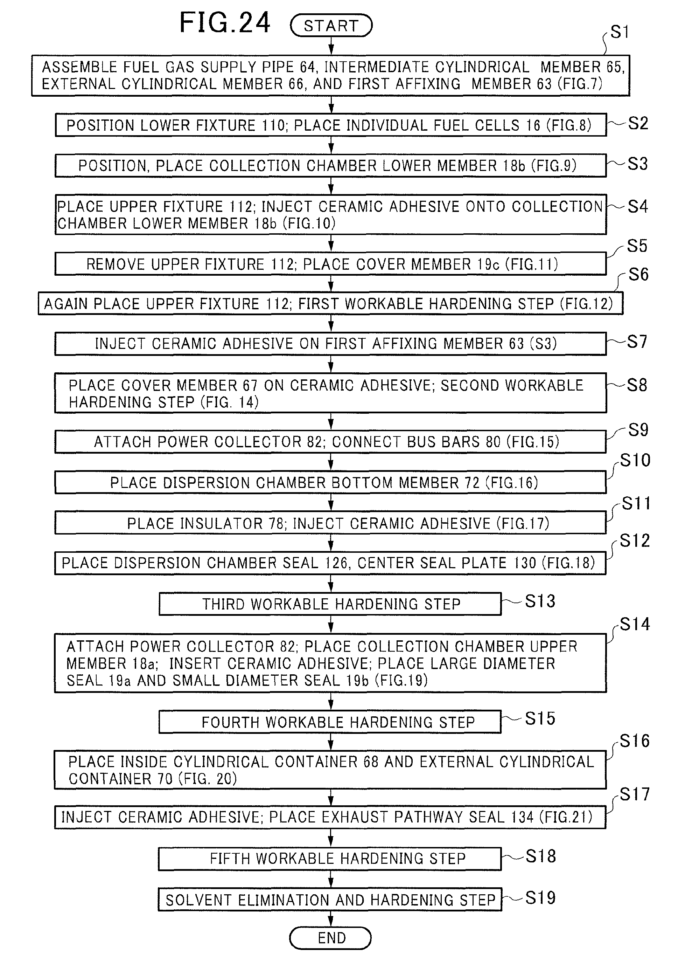

Figs. 7 through 21 are schematics showing the procedure for manufacturing solid oxide fuel cell apparatus 1; for explanatory purposes the detailed constitution thereof is omitted. Fig. 24 is a flowchart showing the manufacturing procedure for solid oxide fuel cell apparatus 1.

0107 First, as shown in Fig. 7, inside cylindrical member 64, intermediate cylindrical member 65, external cylindrical member 66, and first affixing member 63 are assembled by welding (step S1 in Fig. 24). Here first affixing member 63 is disposed so as to be perpendicular to the center axis line of inside cylindrical member 64, and the outer circumferential edge thereof is welded in an airtight manner to the inside wall surface of inside cylindrical member 64. In addition, reforming catalyst 96 is filled into the reforming section 94 provided between inside cylindrical member 64 and intermediate cylindrical member 65. Furthermore, water supply pipe 88 and fuel gas supply pipe 90 are also attached by welding.

0108 Next, as shown in Fig. 8, lower fixture 110, which is a first positioning device, is accurately positioned relative to inside cylindrical member 64 (step S2 in Fig. 24). Lower fixture 110 comprises multiple positioning shafts 110a extending upward, parallel to inside cylindrical member 64; these positioning shafts 110a are disposed to penetrate each of the insertion holes 63a formed in first affixing member 63 and extend. In addition, fuel cells 16 are respectively disposed on each of the positioning shafts 110a which penetrate insertion holes 63a and extend. In this step, each fuel cell 16 is inserted into each insertion hole 63a of first affixing member 63.

0109 By the insertion of positioning shafts 110a into fuel cells 16, one end of fuel cells 16 is positioned relative to positioning shafts 110a. Since lower fixture 110 is positioned relative to inside cylindrical member 64, one end of fuel cell 16 is accurately positioned relative to inside cylindrical member 64, a constituent of fuel cell module 2. Moreover, because the bottom end of each fuel cell 16 contacts the base end surface 110b of positioning shafts 110a, the bottom ends of all fuel cells 16 are positioned in the same plane. I.e., the projection length of each fuel cell 16 from first affixing member 63 is fixed. On the other hand, because there is variability in the lengths of fuel cells 16 due to manufacturing tolerances, the heights of the top ends of the fuel cells 16 are not perfectly uniform.

Therefore in this step, the one end of each fuel cell 16 inserted into each of the insertion holes 63a is positioned relative to the inside cylindrical member 64 that makes up fuel cell module 2.

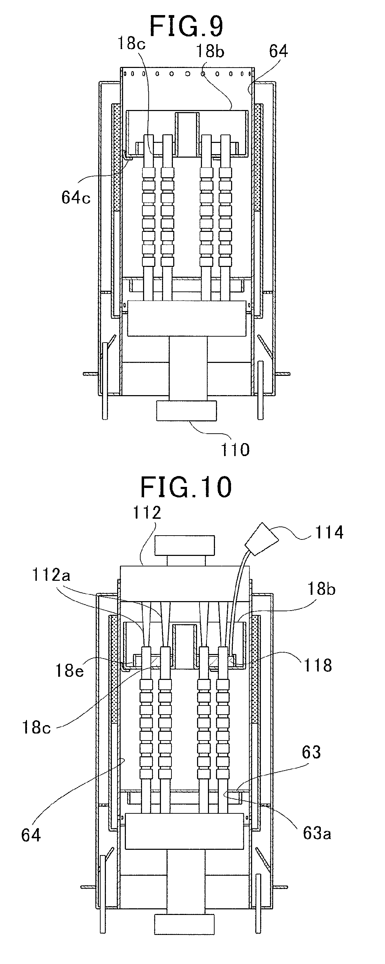

0110 Next, as shown in Fig. 9, collection chamber lower member 18b, which is a second affixing member and constituent of exhaust collection chamber 18, is positioned at the top end of fuel cell 16 (step S3 in Fig. 24). The three stays 64c, which are positioning members, are welded to the inside wall surface of inside cylindrical member 64. Each stay 64 comprises a parallel portion extending parallel to first affixing member 63, and is disposed at equal intervals on the inside wall surface of inside cylindrical member 64. When collection chamber lower member 18b is disposed on top of each stay 64c, collection chamber lower member 18b is dropped down to the parallel portion of each of the stays 64c and accurately positioned relative to inside cylindrical member 64, which makes up the inside wall surface of generating chamber 10. In this state, a uniform gap is formed between the inside circumferential surface of inside cylindrical member 64 and the outside circumferential surface of collection chamber lower member 18b. In this state, the top ends of fuel cells 16 are inserted to each of the insertion holes 18c in collection chamber lower member 18b, which constitutes the second affixing member.

0111 In addition, as shown in Fig. 10, a upper fixture 112, being a second positioning apparatus, is disposed at the top portion of inside cylindrical member 64 (Fig. 24, step S4). Upper fixture 112 comprises multiple truncated cones 112a extending downward, parallel to inside cylindrical member 64. The tips of truncated cones 112a are inserted into downward extending fuel cells 16, and the side surface of each of the truncated cones 112a contacts the top and portion of fuel cells 16. Since upper fixture 112 is correctly positioned relative to inside cylindrical member 64, the top ends of each of the fuel cells 16 are also correctly positioned relative to inside cylindrical member 64.

Therefore in this step, the other end of the fuel cells 16 inserted into insertion holes 18c of collection chamber lower member 18b is registered by upper fixture 112 relative to the inside cylindrical member 64, which constitutes fuel cell module 2.

0112 Thus the top end and bottom portion of each of the fuel cells 16 are accurately positioned relative to inside cylindrical member 64. In this state, an essentially fixed gap is formed between the outer circumferential surface of each fuel cell 16 and the insertion holes 18c in collection chamber lower member 18b, as well as the insertion holes 63a in first affixing member 63. I.e., each fuel cell 16 is positioned at a predetermined position relative to fuel cell module 2 (inside cylindrical member 64), in a state whereby each insertion hole 18c in collection chamber lower member 18b is separated by a predetermined distance from the edge portion of insertion hole 63a on first affixing member 63. A small curve is present in the fuel cells 16 due to manufacturing tolerances, however since fuel cells 16 are correctly positioned relative to fuel cell module 2 at the top and bottom ends, the gap between the outer circumferential surface of fuel cells 16 and each of the insertion holes can be made essentially uniform.

0113 Thus in a state whereby each of the fuel cells 16 is positioned, an adhesive applying step is implemented in which ceramic adhesive is injected onto collection chamber lower member 18b by an adhesive injection apparatus 114, being an adhesive application apparatus. An adhesive filling frame 18e extending in a ring shape to surround all of insertion holes 18c is disposed on collection chamber lower member 18b (Fig. 4). Adhesive injection apparatus 114 fills the inside of adhesive filling frame 18e which surrounds insertion holes 18c with adhesive and applies ceramic adhesive to the joint portion. The region surrounded by adhesive filling frame 18e on collection chamber lower member 18b functions as an adhesive receiving section. Ceramic adhesive is a viscous liquid which slides on collection chamber lower member 18b when injected, and its viscosity is adjusted to the level that an essentially uniform thickness of ceramic adhesive layer 118 can be formed on the inside of adhesive filling frame 18e. Injected ceramic adhesive does fill gaps, eve running into the gap between the outer circumferential surface of each of the fuel cells 16 and the insertion holes 18c, but is given a viscosity such that it will not run downward from these gaps.

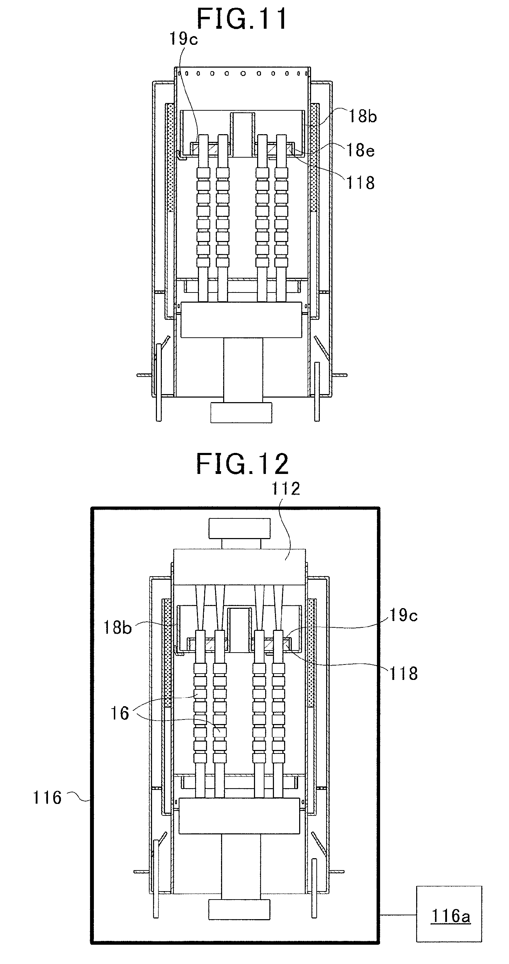

0114 As shown in Fig. 11, a predetermined amount of ceramic adhesive is injected, and after ceramic adhesive layer 118 spreads out uniformly on the inside of adhesive filling frame 18e on top of collection chamber lower member 18b, the upper fixture 112 is removed. In this state, cover member 19c is disposed on top of injected ceramic adhesive layer 118 (Fig. 24, step S5).

0115 As shown in Fig. 12, after cover member 19c is placed, upper fixture 112 is once again attached, and the apparatus placed in this state into drying oven 116; ceramic adhesive layer 118 is hardened and the outer circumferential surface of each fuel cell 16 is affixed to collection chamber lower member 18b (Fig. 24, step S6). Therefore drying oven 116 functions as an adhesive hardening apparatus. Thus the cell joining portion between fuel cells 16, which are constituent members of the flow path which guides fuel, and collection chamber lower member 18b, is joined in an airtight manner by ceramic adhesive layer 118.

0116 Next we explain the dry hardening step for dry hardening ceramic adhesive. The dry hardening step has a workable hardening step for hardening the ceramic adhesive to a state in which the next manufacturing process can be executed, and a solvent elimination step for hardening the ceramic adhesive to a state in which it can withstand the temperature rise in startup procedure of solid oxide fuel cell apparatus 1. Below we explain the workable hardening step.

In the embodiment, ceramic adhesives containing aluminum oxide, quartz, alkali metal silicates, silicon dioxide, and water are used as ceramic adhesive in the embodiment, and these ceramic adhesives are hardened by a dehydration condensation reaction. I.e., ceramic adhesives are hardened by the evaporation of included water, and of moisture produced by the condensation reaction. Therefore an extremely long time period is required to dry and harden ceramic adhesives at room temperature, so it is common in industry to harden using a drying oven or the like. However, because moisture is evaporated and volume shrinks when ceramic adhesive is hardened, cracks form in the ceramic adhesive layer with normal drying and hardening.

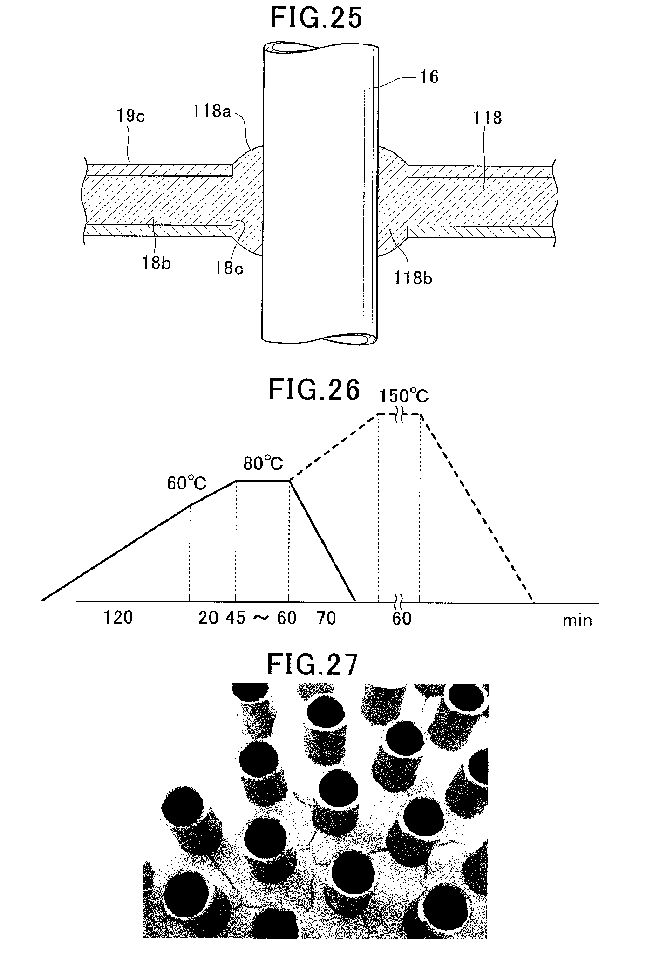

0117 Fig. 27 is a photograph showing an example of when a fuel cell is adhered by the normal adhesion method using ceramic adhesive. As shown in Fig. 27, a large number of cracks has occurred in the hardened ceramic adhesive layer. Cracks are thought to occur on the surface of the earlier hardening adhesive layer at the time of hardening, when moisture in the surface of the adhesive layer evaporates earlier and the adhesive hardens, so that internal moisture evaporates later. Even in such a state, the fuel cells are adhered with sufficient strength, but partial gaps form between the fuel cells and the ceramic adhesive so that sufficient airtightness cannot be secured. I.e., when ceramic adhesive is used with conventional methods, it is difficult to obtain adhesion and airtightness simultaneously, and this is believed to be the reason that they have still not reached a practical stage, notwithstanding multiple literature references proposing the use of ceramic adhesives in the technical field of solid oxide fuel cells.

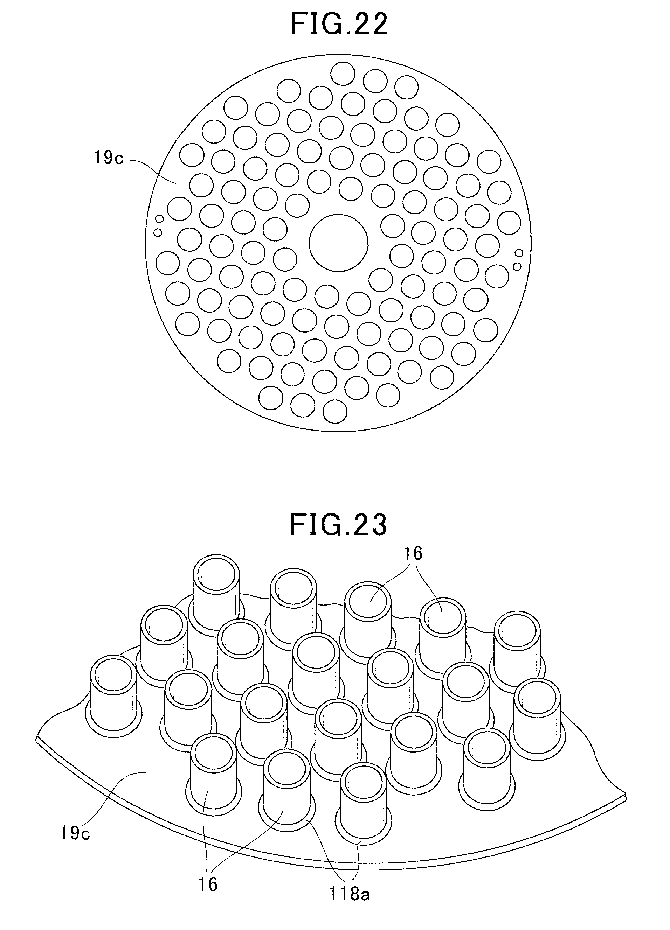

0118 Fig. 22 is plan view of cover member 19c disposed on injected ceramic adhesive in the embodiment.

Cover member 19c is a circular metal plate; a large circular opening for inserting the cylindrical portion of collection chamber lower member 18b is formed at the middle thereof, and multiple insertion holes for inserting each of the fuel cells 16 are formed in the periphery thereof. In the embodiment, the position and size of the insertion holes is constituted to be the same as that of insertion holes 18c in collection chamber lower member 18b.

0119 Fig. 23 is a perspective view showing cover member 19c disposed on the injected ceramic adhesive.

As shown in Fig. 23, when cover member 19c is disposed on be injected ceramic adhesive, ceramic adhesive underneath cover member 19c is pushed out by the weight of cover member 19c. The pushed out ceramic adhesive is filled into the gap between the insertion holes in cover member 19c and the outer circumferential surface of fuel cells 16, and protrudes on the perimeter of the fuel cells 16. As an variant example, a perimeter wall can be formed to surround the insertion holes on the edges of each insertion hole in cover member 19c. Thus even if a large amount of ceramic adhesive is pushed out around each of the fuel cells 16, the flow of adhesive onto cover member 19c can be suppressed.

0120 Note that each of fuel cells 16 is adhered with ceramic adhesive to the lead film layer 104a, 104b parts thereof (Fig. 6). Lead film layers 104a, 104b are dense layers, the same as solid electrolyte layer 100, therefore ceramic adhesive does not invade porous layers in porous support body 97 or the like, and airtightness is not compromised.

0121 Fig. 25 is a cross section showing an expanded view of the adhering portion of fuel cells 16 to collection chamber lower member 18b.

As shown in Fig. 25, fuel cells 16 are inserted into the insertion holes 18c in collection chamber lower member 18b, and ceramic adhesive is injected onto collection chamber lower member 18b. Cover member 19c is disposed on the injected ceramic adhesive. Insertion holes are also formed in cover member 19c at the same positions as collection chamber lower member 18b, and fuel cells 16 penetrate these insertion holes and extend. Since a predetermined gap is present between the insertion holes in cover member 19c and the outer circumferential surface of fuel cells 16, cover member 19c is mounted on top of the ceramic adhesive so that the surface region of the joined fuel cells 16 is exposed. Thus ceramic adhesive layer 118 is formed between collection chamber lower member 18b and cover member 19c. A part of the ceramic adhesive is pressed out from beneath cover member 19c in the surface vicinity of fuel cells 16; the amount of ceramic adhesive in this vicinity increases and a prominence 118a is formed on the periphery of fuel cells 16. Also, pressed out ceramic adhesive forms a hanging portion 118b between insertion holes 18c and fuel cells 16, but due to viscosity, the ceramic adhesive does not flow downward. The assembly on which cover member 19c is disposed is placed in this state into drying oven 116 (Fig. 12).

0122 Fig. 26 is a graph of an example of the temperature control inside drying oven 116.

In the workable hardening step shown in Fig. 12, the control shown by the solid line in Fig 26 is imposed by heating controller 116a. First, after placing the assembly in drying oven 116, the temperature inside the drying oven 116 is raised from room temperature to approximately 60°C in approximately 120 minutes. Next, the temperature in drying oven 116 is raised to approximately 80°C in approximately 20 minutes, and thereafter maintained at approximately 80°C for approximately 60 minutes. After maintain the temperature at approximately 80°C, the temperature in the drying oven 116 is returned to room temperature in approximately 30 minutes.

0123 Thus by gradually raising the temperature, moisture in the ceramic adhesive layer 118 vaporizes slowly. However, because ceramic adhesive layer 118 is covered by cover member 19c, moisture does not directly vaporize from the part covered by cover member 19c. Therefore moisture in ceramic adhesive layer 118 is vaporized slowly through prominence 118a or hanging portion 118b on the periphery of fuel cells 16. Because of this concentration of moisture in prominence 118a and hanging portion 118b, which are exposed to outside air, it is difficult for these parts to dry. Since cover member 19c and collection chamber lower member 18b are made of metal with a high coefficient of thermal conductivity, heating of ceramic adhesive layer 118 is averaged even in cases where there is localized heating due to temperature unevenness, etc. within drying oven 116. This enables the suppression of cracks caused by sudden localized drying of the ceramic adhesive layer 118. On the other hand, because each of the fuel cells 16 is made of ceramic with a low coefficient of thermal conductivity, it is difficult for heat to transfer to the prominence 118a and hanging portion 118b around the fuel cells 16, and the drying and hardening of these parts is thus more gradual than other parts.

0124 Thus in the embodiment, because drying of the prominence 118a and hanging portion 118b on each of the fuel cells 16 is gradual, what is important for securing airtightness is to prevent cracking in the periphery of each of the fuel cells 16. Vaporization of moisture from the ceramic adhesive also results in reduction in the volume of the ceramic adhesive layer 118, producing "shrinkage." However in the peripheral part of each of the fuel cells 16, because of the formation of prominence 118a and hanging portion 118b, the ceramic adhesive layer is thicker than in other parts, therefore gaps between fuel cells 16 and the ceramic adhesive layer caused by the occurrence of shrinkage can be prevented. Thus airtightness can be secured in the adhered portion between each of the fuel cells 16 and each of the insertion holes 18c. Cover member 19c, which is disposed to cover the parts filled with ceramic adhesive, suppresses the occurrence of cracks when the ceramic adhesive hardens.

0125 Because of the formation of prominence 118a and hanging portion 118b, there is little through-puncturing of the ceramic adhesive by cracks even if a few cracks do occur in these parts, so airtightness can be reliably secured. Therefore prominence 118a and hanging portion 118b function as gas leak prevention portions for suppressing the occurrence of cracks caused by shrinkage when the ceramic adhesive hardens. Note that hardened ceramic adhesive is porous, and although airtightness relative to hydrogen or air is not total, a ceramic adhesive filled and hardened without gaps provides sufficient airtightness for practical use. In this Specification, the term "securing airtightness" means there are no leaks of moisture or air at a practical level.

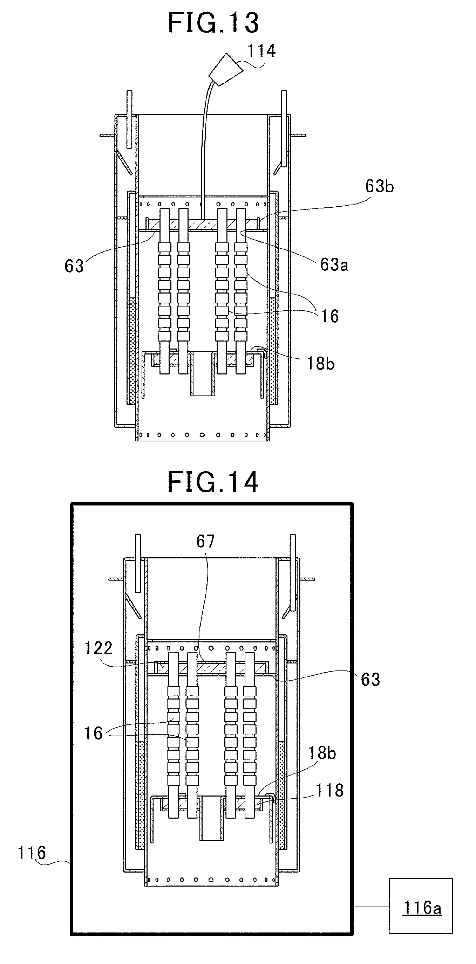

0126 In the workable hardening step shown in Fig. 12, the ceramic adhesive is hardened to a state in which the manufacturing processes subsequent to step S7 in Fig. 7 can be practiced. In this state, adhesion strength from the ceramic adhesive is sufficiently high, and in the use of common ceramic adhesives, this state can be viewed as the completion of the adhesion step. However, when ceramic adhesive is use in the assembly of solid oxide fuel cell apparatus 1, this state is insufficient, and if solid oxide fuel cell apparatus 1 is operated in this state, residual moisture inside solid oxide fuel cell apparatus 1 will suddenly vaporize, causing large cracks in the ceramic adhesive. In this embodiment, for this state, the manufacturing processes in Fig. 13 and below are implemented.

0127 Next, after performing the workable hardening step, lower fixture 110 and upper fixture 112 are removed. Furthermore, as shown in Fig. 13, the top and bottom of the assembly are inverted, and ceramic adhesive is injected into the top of first affixing member 63 (the bottom surface when top and bottom are uninverted), from which the tip portions of each of the fuel cells 16 are protruding (Fig. 24, step S7). The outer circumferential surfaces of each of the fuel cells 16 with circular cross sections are affixed by ceramic adhesive to the edge portions of each of the round insertion holes 63a disposed on first affixing member 63. Here, adhesive filling frame 63b, extending in a circular shape to surround all of the insertion holes 63a, is disposed on first affixing member 63 (Fig. 3). For the adhesive application step, ceramic adhesive is injected by adhesive injection apparatus 114 into the interior of adhesive filling frame 63b, which surrounds each of the insertion holes 63a. Note that adhesion of each of the fuel cells 16 to first affixing member 63 in this step is the same as the above-described adhesion to collection chamber lower member 18b. Also, in this step each of the fuel cells 16 is affixed to collection chamber lower member 18b, therefore each of the fuel cells 16 can be held in the appropriate position without using upper fixture 112.

0128 Furthermore, as shown in Fig. 14, cover member 67 is disposed on the injected ceramic adhesive, and a ceramic adhesive layer 122 is formed between first affixing member 63 and cover member 67 (Fig. 24, step S8). Except for the formation of a circular opening at the center, cover member 67 is constituted in the same way as cover member 19c (Fig. 22), suppressing cracking during ceramic adhesive hardening. By placement of this cover member 67, a prominence and a hanging portion similar to Fig. 25 are formed on the periphery of each of the fuel cells 16, and the peripheral part of ceramic adhesive layer 122 on each of the fuel cells 16 serves to suppress gas leakage.

0129 In this state, assembly is placed in drying oven 116, and the second workable hardening step is implemented. In this workable hardening step, as well, the temperature inside drying oven 116 is controlled as shown by the solid line in Fig 26. Note that in the embodiment, in the second workable hardening step the time during which the temperature inside drying oven 116 is maintained at 80°C is set to approximately 50 minutes. In the second workable hardening step, ceramic adhesive layer 122 on first affixing member 63 is hardened, and each of the fuel cells 16 is affixed to first affixing member 63. Thus the cell joining portion between fuel cells 16, which are constituent members of the flow path which guides fuel, and first affixing member 63, is joined in an airtight manner by ceramic adhesive layer 118. The operation of cover member 67 on this occasion is the same as in the first workable hardening step. Ceramic adhesive layer 118 is placed in a more stable state by the implementation of the second workable hardening step to ceramic adhesive layer 118 on collection chamber lower member 18b.

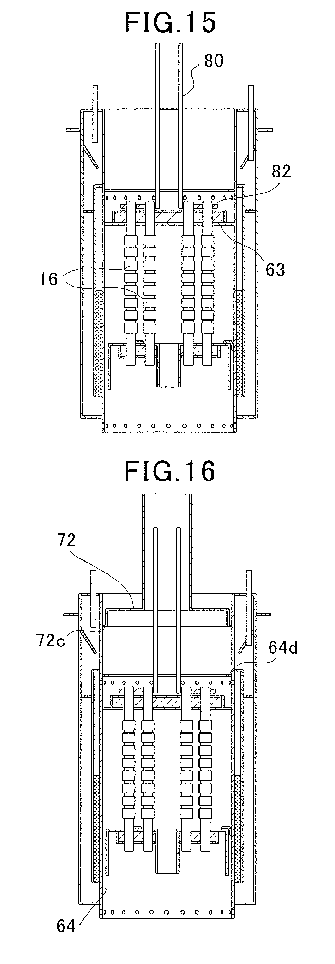

0130 Next, as shown in Fig. 15, power collector 82 is attached to the tip portions (the bottom portion when top and bottom are inverted) of each of the fuel cells 16 protruding from first affixing member 63, and this power collector 82 is connected to bus bars 80 (Fig. 24, step S9).

0131 Furthermore, as shown in Fig. 16, dispersion chamber bottom member 72 is inserted from the opening at the bottom of inside cylindrical member 64 at the bottom of Fig. 16). This dispersion chamber bottom member 72 is inserted up to the position at which the flange portion 72c on the outer circumference thereof makes contact with the ring shaped shelf member 64d welded onto the inside wall surface of inside cylindrical member 64, and will be registered at that position (Fig. 24, step S10).

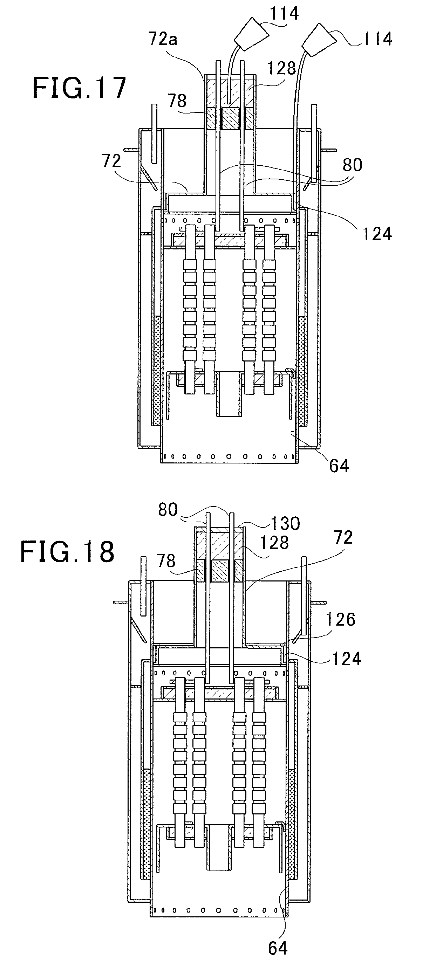

0132 Next, as shown in Fig. 17, ceramic adhesive is filled by adhesive injection apparatus 114 into the circular gap between the outer circumferential surface of dispersion chamber bottom member 72 and the inner circumferential surface of inside cylindrical member 64. Also, insulator 78 is disposed in the middle of the insertion pipe 72a provided at the center of dispersion chamber bottom member 72, and each of the bus bars 80 extending from power collector 82 penetrate this insulator 78. In addition, as an adhesive application step, ceramic adhesive is filled by adhesive injection apparatus 114 into the insertion pipe 72a on which insulator 78 is disposed. Each of the bus bars 80 extends through insertion pipe 72a to the outside, and ceramic adhesive is filled into the space surrounding each of the bus bars 80 inside insertion pipe 72a (Fig. 24, step S11).

0133 In addition, a dispersion chamber seal 126, being a circular thin plate on the ceramic adhesive layer 124 filled into the circular gap between the outer circumferential surface of dispersion chamber bottom member 72 and the inner circumferential surface of inside cylindrical member 64, is disposed as shown in Fig. 18. Also, a center seal plate 130 is disposed on the ceramic adhesive layer 128 filled into the interior of insertion pipe 72a (Fig. 24, step S12). A center seal plate 130 penetrates the holes formed on each bus bar 80. These dispersion chamber seals 126 and center seal plates 130 function as cover members for controlling the occurrence of cracks when the ceramic adhesive is hardening. In the state, the assembly is placed into drying oven 116 (not shown in Fig. 18), and a third workable hardening step is implemented (Fig. 24, step S13). In this workable hardening step, as well, the temperature inside drying oven 116 is controlled as shown by the solid line in Fig 26. Note that in the embodiment, in the third workable hardening step the time during which the temperature inside drying oven 116 is maintained at 80°C is set to approximately 45 minutes. In the second workable hardening step, ceramic adhesive layer 124 is hardened, and dispersion chamber bottom member 72 and inside cylindrical member 64 are adhered and affixed. Thus the joint portion between dispersion chamber bottom member 72, which is a constituent part of the flow path guiding fuel, and inside cylindrical member 64, is joined in an airtight manner by ceramic adhesive. In addition, ceramic adhesive layer 128 is also hardened, and insertion pipe 72a through which each of the bus bars 80 penetrate is closed off in an airtight manner.

0134 When these ceramic adhesives are dried, dispersion chamber seal 126 and center seal plate 130 prevent the sudden drying out of the surfaces of each of the adhesive layers, thereby suppressing the occurrence of cracks in ceramic adhesive layers 124 and 128. Also, ceramic adhesive layer 124, which is filled into the gap between inside cylindrical member 64 and dispersion chamber bottom member 72, is heated and hardened uniformly because of its circular shape, and the occurrence of cracking is thereby suppressed. For example, if the ceramic adhesive layer is formed in a rectangular shape, the speed of hardening differs between the corner portions and other parts, therefore the parts which dry and harden first are stretched by shrinkage of the ceramic adhesive and therefore tend to crack more easily. Stress is also more easily concentrated at the corner portions due to shrinkage of the ceramic adhesive such that cracks can easily occur. By contrast, because ceramic adhesive layer 124 in the embodiment is circular in shape, stress caused by shrinkage of the adhesive is not concentrated as drying and hardening proceed, therefore the occurrence of cracking associated with hardening of the ceramic adhesive can be suppressed. As a variant example, ceramic adhesive layer 124 can be constituted in an oval shape.

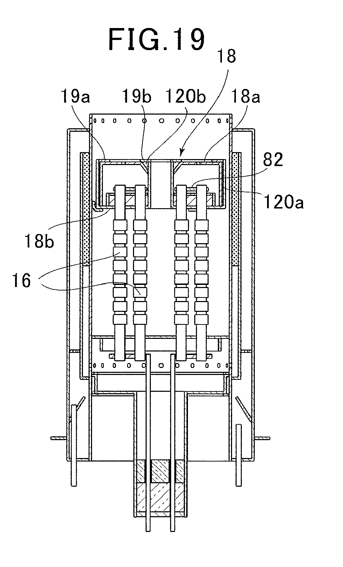

0135 After completion of the third workable hardening step, the top and bottom of the assembly are inverted, and as shown in Fig. 19, power collector 82 is attached to the tip portion of each of the fuel cells 16, which are affixed in such a way as to protrude from collection chamber lower member 18b (Fig. 24, step S14). The tip portions of each of the fuel cells 16 are thus electrically connected by this power collector 82. Furthermore, collection chamber upper member 18a is disposed on the opening portion at the top of collection chamber lower member 18b. There is a (circular) gap (Fig. 4) between the outer circumferential surface of the disposed collection chamber upper member 18a and the inner circumferential surface of the outer perimeter wall of collection chamber lower member 18b. Next, an adhesive application step is implemented to fill this gap with ceramic adhesive layer 120a using adhesive injection apparatus 114 (not shown in Fig. 19). A circular large diameter seal 19a is disposed so as to cover the filled-in adhesive on top of ceramic adhesive layer 120a. There is also a circular gap between the outer circumferential surface of collection chamber lower member 18b and the opening portion at the center of collection chamber upper member 18a, and this gap is also filled with ceramic adhesive layer 120b using adhesive injection apparatus 114 (not shown in Fig. 19). A circular small diameter seal 19b is disposed to cover the filled-in adhesive on top of ceramic adhesive layer 120b. This large diameter seal 19a and small diameter seal 19b function as cover members for controlling the occurrence of cracks when the ceramic adhesive is hardening.

0136 Note that as a variant example, the invention can be constituted in such a way that the members are formed so the gap between collection chamber upper member 18a and collection chamber lower member 18b is oval in shape, and exhaust collection chamber 18 is formed by filling this gap with ceramic adhesive. Note that as a variant example, the invention can be constituted in such a way that the members are formed so the gap between the cylindrical portion of collection chamber lower member 18b and the opening portion of collection chamber upper member 18a is oval in shape, and exhaust collection chamber 18 is formed by filling this gap with ceramic adhesive.

0137 In the state, the assembly is again placed into drying oven 116 (not shown in Fig. 19), and a third workable hardening step is implemented (Fig. 24, step S15). In this workable hardening step, as well, the temperature inside drying oven 116 is controlled as shown by the solid line in Fig. 26. Note that in the embodiment, in the fourth workable hardening step the time during which the temperature inside drying oven 116 is maintained at 80°C is set to approximately 45 minutes. Ceramic adhesive layer 120a in the perimeter portion of exhaust collection chamber 18 and ceramic adhesive layer 120b in the center portion of exhaust collection chamber 18 are hardened by the fourth workable hardening step. At this time, large diameter seal 19a disposed on ceramic adhesive layer 120a and small diameter seal 19b disposed on ceramic adhesive layer 120b prevent sudden vaporization of moisture in each of the ceramic adhesive surfaces in the workable hardening step. The occurrence of cracks in ceramic adhesive layers 120a and 120b can thus be suppressed, and the airtightness of joint portions secured. Thus the joining portion between collection chamber upper member 18a, which is a constituent part of the flow path which guides fuel, and collection chamber lower member 18b, is joined in an airtight manner by ceramic adhesive. Note that each of the ceramic adhesive layers, hardened by what is now three iterations of the workable hardening step, is again gradually heated in a fourth workable hardening step, so remaining moisture is vaporized while avoiding the risk of cracking, and a more stable state is obtained.

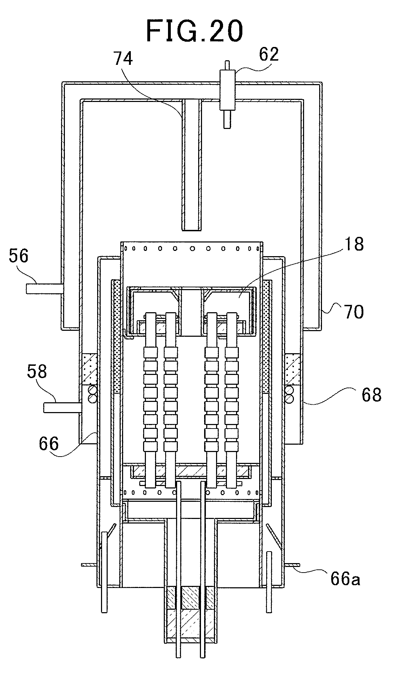

0138 Next, as shown in Fig. 20, inside cylindrical container 68 and external cylindrical container 70, which is a supply path constituent part, are placed onto the top of the assembly assembled up to the state shown in Fig. 19 (Fig. 24, step S16). Inside cylindrical container 68 and external cylindrical container 70 are attached to the assembly in a state whereby they are joined by welding. Also, exhaust gas exhaust pipe 58 is attached to the outside wall surface lower portion of inside cylindrical container 68, and oxidant gas jetting pipe 74 is attached to the inside ceiling thereof. Oxidant gas introducing pipe 56 is attached to the outside wall surface lower portion of external cylindrical container 70. Also, ignition heater 62 is attached so as to penetrate inside cylindrical container 68 and external cylindrical container 70. By placing inside cylindrical container 68 over the assembly, an exhaust gas discharge flow path 21 (Fig. 2) is formed between the outer circumferential surface of external cylindrical member 66 and the inner circumferential surface of inside cylindrical container 68. Also, oxidant gas jetting pipe 74 attached to inside cylindrical container 68 penetrates the opening portion at the center of the exhaust collection chamber 18 on the assembly.

0139 Note that as a variant example, the invention can be constituted so that inside cylindrical container 68 and external cylindrical container 70 are adhered using ceramic adhesive. In this case, ceramic adhesive is filled into the circular gap between inside cylindrical container 68 and external cylindrical container 70, affixing these members in an airtight manner. Alternatively, the invention can be constituted in such a way that these members are configured so the gap between the inside cylindrical container and the outside cylindrical container has an oval shape, and ceramic adhesive is filled into this oval shaped gap to affix these members in an airtight manner.

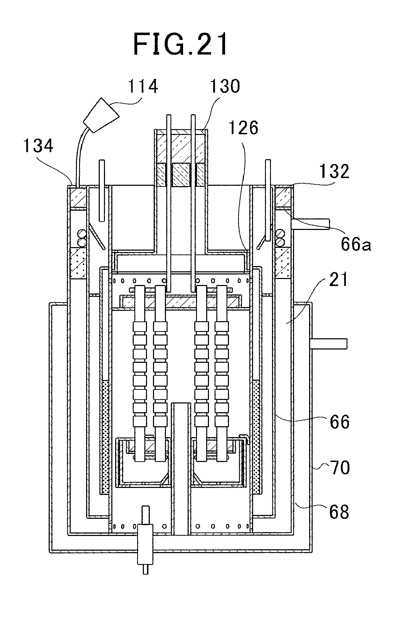

0140 As shown in Fig. 21, the top and bottom of the assembly onto which inside cylindrical container 68 and external cylindrical container 70 are placed are again inverted. Here, circular shelf member 66a is welded to the outside wall surface lower portion of external cylindrical member 66 (the top portion in Fig. 21); this shelf member 66a closes the gap between the outer circumferential surface of external cylindrical member 66 and the inner circumferential surface of inside cylindrical container 68. This circular space, surrounded by the outer circumferential surface of external cylindrical member 66, the inner circumferential surface of inside cylindrical container 68, and shelf member 66a, is filled with ceramic adhesive by the adhesive injection apparatus 114 as an adhesive application step (Fig. 24, step S17). Note that as a variant example, an outside cylindrical member and inside cylindrical container may be constituted so the gap between the outside cylindrical member and inside cylindrical container filled with ceramic adhesive is oval in shape.

0141 A circular exhaust passage seal 134 is disposed to cover filled-in ceramic adhesive layer 132. This exhaust passage seal 134 functions as a cover member for suppressing the occurrence of cracks when the ceramic adhesive hardens. In the state, the assembly is placed into drying oven 116 (not shown in Fig. 21), and a fifth workable hardening step is implemented (Fig. 24, step S18).

0142 In this workable hardening step, as shown in Fig. 26, the temperature inside drying oven 116 is first raised from room temperature to approximately 60°C in a approximately 120 minutes by heating controller 116a, then raised to approximately 80°C in approximately 20 minutes and maintained thereafter for approximately 60 minutes at approximately 80°C. After maintaining the temperature at approximately 80°C, the temperature inside drying oven 116 is raised to approximately 150°C in approximately 70 minutes as shown by the dotted line in Fig. 26, as solvent elimination and hardening step. In addition, after the temperature is maintained at approximately 150°C for approximately 60 minutes, it is then returned to room temperature in approximately 60 minutes.

0143 I.e., by implementing a fifth workable hardening step, the newly filled ceramic adhesive layer 132 is heated and hardened, and external cylindrical member 66 and inside cylindrical container 68 are adhered in an airtight manner. Thus the joint portion between external cylindrical member 66, which is a constituent part of the flow path guiding oxidant gas, and inside cylindrical container 68, is joined in an airtight manner by ceramic adhesive. At this time, the operation of exhaust passage seal 134 and the effect from the circular ceramic adhesive layer 132 are the same as for the above-described dispersion chamber seal 126 and ceramic adhesive layer 124. Also, the ceramic adhesive layers hardened in first through fourth workable hardening steps have respectively been subjected to multiple workable hardening steps, therefore gradual drying has been repeatedly applied, and a stable state of the ceramic adhesive layers is obtained while avoiding the risk of cracking.

0144 In particular, the workable hardening steps applied to the cell joining portion between each of the fuel cells 16 and collection chamber lower member 18b is executed in the first of the five implemented workable hardening steps. Also, after the last implemented workable hardening step applied to the cell joining portion, i.e., the workable hardening step applied to the joint portion between each of the fuel cells 16 and first affixing member 63 (the second workable hardening step), three iterations of workable hardening steps are implemented on constituent members other than the fuel cells 16. Therefore four or more workable hardening steps are implemented on each of the cell joint portions, and an extremely stable state is obtained for the ceramic adhesive layers in each of the cell joint portions. A major problem results if airtightness is compromised in the cell joint portions, but airtightness can be reliably secured by repeatedly applying these workable hardening steps.

0145 The workable hardening steps applied between external cylindrical member 66 and inside cylindrical container 68 after the workable hardening steps applied to the cell joint portion have the purpose of securing airtightness in the exhaust gas discharge flow path 21 which conducts exhaust; even if by some chance airtightness is compromised here, the resulting negative effects would be less than when airtightness is compromised at the joint portion. In addition, as shown in the variant example described above, when inside cylindrical container 68 and external cylindrical container 70 are joined by ceramic adhesive, the workable hardening step applied to this joint portion is implemented after the workable hardening step applied to the cell joint portion. The joint portion between inside cylindrical container 68 and external cylindrical container 70 has the purpose of securing the airtightness of oxidant gas supply flow path 22, and even if by some chance airtightness is compromised here, the resulting negative effects would be less than when airtightness is compromised at the joint portion.

0146 Continuing after implementing the fifth workable hardening step, which is the last workable hardening step, a solvent elimination and hardening step is implemented (Fig. 24, step S19). Thus the solvent elimination and hardening step is carried out after the adhesive application step and the workable hardening step are repeated several times. In the solvent elimination hardening step, a dehydration condensation reaction is carried out in the workable hardening step, residual moisture is further vaporized from the fully hardened ceramic adhesive layers, and drying is applied until a state is reached at which the assembly can withstand the temperature rise in the solid oxide fuel cell apparatus 1 startup procedure. In the embodiment, the solvent elimination and hardening step is implemented by maintaining a temperature inside the drying oven 116 of approximately 150°C for approximately 180 minutes. By implementing the solvent elimination and hardening step at a temperature higher than the workable hardening step, the ceramic adhesive layer can be dried in a short period of time to a state capable of withstanding the temperature rise in the startup state.

0147 It is thus desirable to execute the solvent elimination and hardening step at a temperature higher than the workable hardening step and lower then during the electrical generation operation by solid oxide fuel cell apparatus 1. The ceramic adhesive used in the embodiment can be dried at a temperature of 200°C or below to a state capable of withstanding the temperature rise at the startup procedure, and the solvent elimination and hardening step is preferably executed at a temperature equal to or greater than 100°C and less than or equal to 200°C. The ceramic adhesive used in the embodiment can be dried at a temperature of 200°C or below to a state capable of withstanding the temperature rise at the startup procedure, and the solvent elimination and hardening step is preferably executed at a temperature equal to or greater than 100°C and less than or equal to 200°C.

0148 Ceramic adhesive filled in during the adhesive application step then passes through at least one workable hardening step, therefore even if the temperature of the drying oven 116 is raised to approximately 150°C in the solvent elimination and hardening step, no large cracks will occur in the ceramic adhesive layer. Note that even after completion of the solvent elimination and hardening step, there is moisture remaining in each of the ceramic adhesive layers, but since this is a minute amount, problems such as cracking do not occur even if the temperature inside fuel cell module 2 climbs to the electrical generation temperature level. Also, in the embodiment the solvent elimination and hardening step is carried out only once after multiple repetitions of the adhesive application step and the workable hardening step, and then a final workable hardening step, are executed, but it is also possible to implement the solvent elimination and hardening step multiple times during the manufacturing process.

0149 As a variant example, a solvent elimination and hardening step can also be added between the workable hardening step S1 and step S16 in Fig. 24. In this variant example, the added solvent elimination and hardening step is carried out by dividing into two iterations: a first solvent elimination and hardening step, and a second solvent elimination and hardening step.

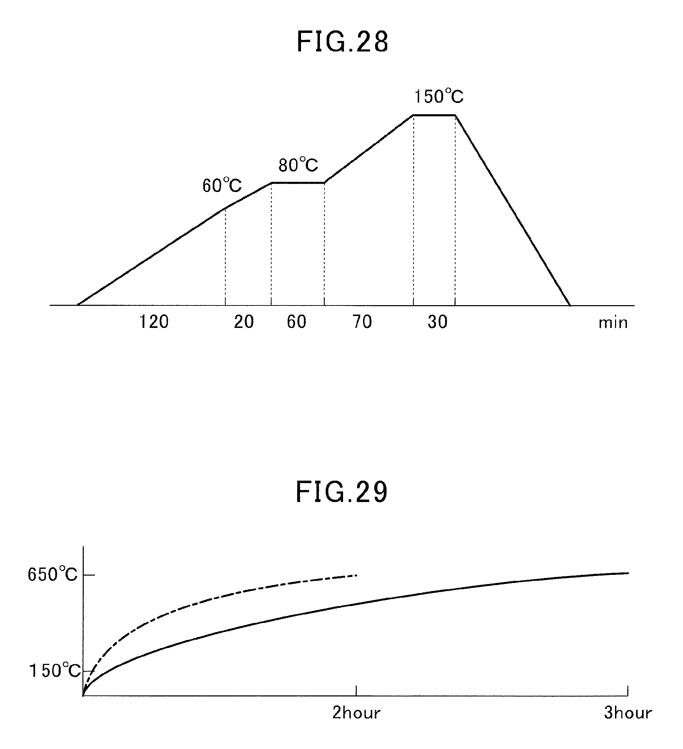

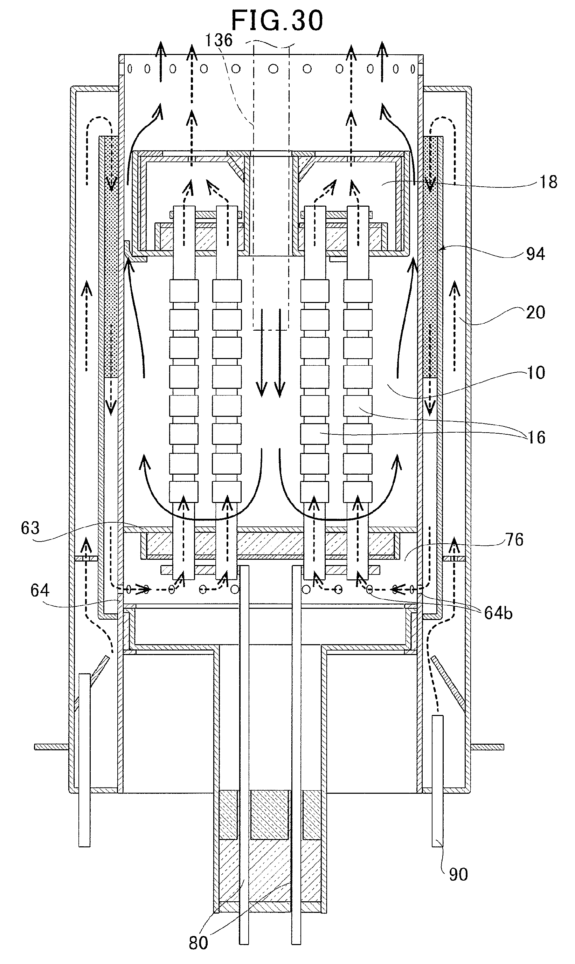

Figs. 28 through 30 are diagrams explaining the solvent elimination and hardening step according to this variant example. Fig. 28 is a diagram showing a first solvent elimination and hardening step, and Fig. 29 is a diagram showing a second solvent elimination and hardening step in this variant example. Fig. 30 is a diagram explaining the method of heating in a second solvent elimination and hardening step.

0150 First, when implementing the manufacturing method of this variant example, the heating in the first half of Fig. 28 is carried out as the fourth workable hardening step in Fig. 24, step S15. I.e., the assembly as assembled up through step S14 is placed into drying oven 116, and the temperature inside drying oven 116 is maintained at approximately 80°C for approximately 60 minutes. Next, as shown in Fig. 28, as a first solvent elimination and hardening step the temperature inside drying oven 116 is raised to approximately 150°C in approximately 70 minutes, and after this temperature is maintained for approximately 30 minutes, the temperature is reduced. In this first solvent elimination and hardening step the temperature is raised to approximately 150°C, but since each ceramic adhesive passes through at least one iteration of the solvent elimination and hardening step, no large cracks in the ceramic adhesive layers are produced by this heating.

0151 Next, the second solvent elimination and hardening step shown in Fig. 29 is implemented. In this second solvent elimination and hardening step, the temperature inside generating chamber 10 and of the fuel cells 16 rises to the temperature at the time of electrical generation operation, or close to that temperature. In the second solvent elimination and hardening step, heating of the assembly is not done inside the drying oven 116 but rather, as shown in Fig. 30, by feeding heated air into generating chamber 10 to heat the interior of generating chamber 10 and the fuel cells 16. I.e., in the second solvent elimination and hardening step, heated air introduction pipe 136 is inserted into generating chamber 10 through the opening portion at the center of exhaust collection chamber 18. In the second solvent elimination and hardening step, heated air is introduced into generating chamber 10 through heated air introduction pipe 136. The introduced air, as shown by the solid line arrow in Fig. 30, heats each of the fuel cells 16 in generating chamber 10, then passes through the gap between the outer circumference of exhaust collection chamber 18 and the inner circumferential wall of inside cylindrical member 64 and flows to the outside of the assembly. Each of the ceramic adhesive layers at the joint portion of the fuel cells 16 and the first affixing member 63, the joint portion of the collection chamber lower member 18b and the fuel cells 16, the joint portion of the collection chamber upper member 18a and the collection chamber lower member 18b, and the joint portion of the dispersion chamber bottom member 72 and the inside cylindrical member 64 are heated, and solvent remaining within the hardened ceramic adhesive is further vaporized.

0152 The temperature of air introduced into generating chamber 10 through heated air introduction pipe 136 is raised a little at a time over a long period of time up to the temperature at which solid oxide fuel cell apparatus 1 can generate electricity. In this variant example, as shown by the solid line in Fig. 29, the temperature of heated air introduced from heated air introduction pipe 136 is raised to approximately 650°C over approximately 3 hours from the start of introduction. This temperature rise is made more gradual than the temperature rise in generating chamber 10 during the solid oxide fuel cell apparatus 1 startup procedure shown by the single dot and dash line in Fig. 29. In the example shown in Fig. 29, the temperature inside generating chamber 10 is raised to approximately 650°C in approximately 2 hours, whereas in the second solvent elimination and hardening step, the temperature of the supplied air is raised to approximately 650°C in approximately 3 hours.

0153 By thus gradually raising the temperature, the solvent remaining in the ceramic adhesive layer is heated a little at a time and vaporized. The occurrence of excessive cracks due to sudden volumetric expansion and vaporization of the solvent is thus suppressed. Also, in the second solvent elimination and hardening step the temperature of each of the ceramic adhesive layers in the generating chamber 10 is raised up to the actual temperature during electrical generation operation. As a result, even if the temperature of a finished solid oxide fuel cell apparatus 1 is suddenly raised during the startup procedure, the absence of excessive cracking in the ceramic adhesive layer can be more reliably assured.

0154 Also the second solvent elimination and hardening step, in which the temperature inside the generating chamber 10 is raised to approximately 650°C, can be implemented at the end of step S15 rather than at the end of the assembly process (after Fig. 24, step S18), thereby simplifying the assembly step. I.e., it is possible to pre-attach combustion catalyst 60, ignition heater 62, sheath heater 61, and devices such as sensors to the inside cylindrical container 68 and external cylindrical container 70 assembled in step S16, so that these devices can be assembled in a single pass at the same time that inside cylindrical container 68 and external cylindrical container 70 are being attached. However these devices cannot withstand a temperature of approximately 650°C (during actual electrical generation operation of solid oxide fuel cell apparatus 1, the locations where these devices are attached do not rise to a temperature of approximately 650°C). Therefore if the second solvent elimination and hardening step is implemented after completion of the attachment of inside cylindrical container 68 and external cylindrical container 70 (after step S18 in Fig. 24), it becomes necessary to separately attach devices such as the ignition heater 62, etc. later on, thereby complicating the manufacturing process.

0155 On the other hand in the second solvent elimination and hardening step inert gas is introduced from fuel gas supply pipe 90 in parallel with the introduction of heated air from heated air introduction pipe 136. As indicated by the dotted arrow in Fig. 30, inert gas supplied from fuel gas supply pipe 90 rises to the top end within fuel gas supply flow path 20, then drops down through reforming section 94, passes through the small holes 64b formed in the lower portion of inside cylindrical member 64, and flows into fuel gas dispersion chamber 76. Inert gas which has flowed into fuel gas dispersion chamber 76 flows through the inside (the fuel electrode side) of each of the fuel cell units 16 attached to first affixing member 63 of fuel gas dispersion chamber 76 and into exhaust collection chamber 18. Inert gas which has flowed into exhaust collection chamber 18 is jetted out from jet openings 18d in exhaust collection chamber 18 and flows out to the outside of the assembly.

0156 In this variant example, nitrogen gas is used as the inert gas. The introduced nitrogen gas is heated so as to be able to heat the interior of each of the fuel cells 16. In this way, inert gas is introduced into each of the fuel cells 16, and the oxidant gas (air) in each of the fuel cells 16 and the reforming section 94 is thereby discharged. Oxidation of the fuel electrodes in each of the fuel cells 16 and oxidation of the reforming catalyst in reforming section 94 when the temperature is raised during the electrical generation operation can thus be prevented. Also, in the second solvent elimination and hardening step, hydrogen gas maybe supplied from the fuel gas supply pipe 90 instead of inert gas. In such cases, the hydrogen gas passes over the fuel electrode side in each of the fuel cells 16, which have been raised to a high-temperature, therefore the fuel electrodes can be reduced. Note that in the second solvent elimination and hardening step, inert gas is supplied until the temperature in each of the fuel cells 16 has risen sufficiently, and after the temperature has risen, inert gas is switched over to hydrogen gas.

0157 Note that in this variant example it is possible after the first solvent elimination and hardening step to raise the temperature up to the temperature of the second solvent elimination and hardening step without reducing the temperature. In this case as well it is necessary to supply inner gas from fuel gas supply pipe 90. Of the first and second solvent elimination and hardening steps, it is possible to eliminate the first solvent elimination and hardening step. In such cases, the rise in the temperature of supplied heated air is made even more gradual during the second solvent elimination and hardening step; it is desirable to raise the temperature over 4 or more hours.

0158 In a state in which oxidant gas is supplied to the air electrode side of each of the fuel cells 16, hydrogen gas is supplied to the fuel efficiency side, and the temperature of each of the fuel cells 16 is sufficiently raised, a voltage is generated between the two bus bars 80 connected to fuel cells 16. By measuring the voltage between these bus bars 80, a determination can be made as to the go/no go status of the joint portions of each of the fuel cells 16 and the assembly. The measurement of voltage is carried out with no current flowing between the bus bars 80. When there is a problem in the fuel cells 16 themselves, the voltage produced between bus bars 80 drops. Also, if a large fuel leak occurs at the joint portion between each of the fuel cells 16 and the first affixing member 63, or at the joint portion between each of the fuel cells 16 and the collection chamber lower member 18b, sufficient fuel gas is not supplied to the fuel electrode, so the voltage drops. Thus in the second solvent elimination and hardening step, reduction of the fuel electrodes on each of the fuel cells 16 and inspection of the semi-finished solid oxide fuel cell apparatus 1 product can be accomplished simultaneously.

0159 It is also possible to change the time for the workable hardening step set in this embodiment. For example the time for the initially implemented workable hardening step could be made shorter than the time for subsequently performed workable hardening steps. The joint portion on which the workable hardening step is performed at the beginning is treated to a greater number of iterations of workable hardening steps than subsequently treated joint portions, therefore the risk of cracking can be sufficiently reduced while shortening the time required for the workable hardening step.

0160 After fuel cell housing container 8 is completed by the above-described manufacturing processes, various parts are attached to complete a solid oxide fuel cell apparatus 1. The lower fixture 110 (first positioning apparatus), upper fixture 112 (second positioning apparatus), adhesive injection apparatus 114, drying oven 116, and heating controller 116a constitute the manufacturing equipment for a solid oxide fuel apparatus used in the above-described manufacturing method for solid oxide fuel cell apparatus 1.

0161 Using the manufacturing method for a solid oxide fuel cell apparatus 1 of according to an embodiment of the present invention, each fuel cell 16 can be directly positioned relative to first affixing member 63 attached within fuel cell module 2, without assembly as a fuel cell stack (Fig. 8). Therefore it does not occur that a fuel cell stack in which multiple fuel cells 16 are assembled will be incapable of attachment inside the fuel cell module. Also, multiple fuel cells 16, on which one end portion and the other end portion are positioned relative to fuel cell module 2, are simultaneously affixed by ceramic adhesive (Fig. 13) injected onto first affixing member 63 (Fig. 14 and step S8 in Fig. 24), therefore assembly does not become impossible at the stage in which assembly using ceramic adhesive has terminated midway through completion. If there are fuel cells which cannot be positioned to a particular position due to manufacturing tolerances, it is sufficient to discard only those fuel cells, and yield can be improved.

0162 Using the manufacturing method for a solid oxide fuel cell apparatus 1 according to the present embodiment, the other end portion of each fuel cell 16 is affixed by the injection of ceramic adhesive (Fig. 10 and step S4 in Fig. 24) onto the collector chamber lower member 18b into which these other end portions are inserted (Fig. 12 and step S6 in Fig. 24), therefore both end portions of the multiple fuel cells 16 can be affixed extremely efficiently within fuel cell module 2.

0163 Moreover, the solid oxide fuel cell apparatus 1 manufacturing method of the present embodiment has a solvent removal and hardening step (step S19 in Fig. 24; dotted line in Fig. 26) for drying ceramic adhesive, which has been injected onto first affixing member 63 and collector chamber lower member 18b and hardened, to a state whereby it can withstand the temperature rise in the startup step. Therefore the solvent removal and hardening step can be performed in one iteration on ceramic adhesive hardened in multiple locations, such that manufacturing efficiency can be improved.

0164 Using the manufacturing apparatus for a solid oxide fuel cell apparatus 1 according to an embodiment of the present invention, each fuel cell 16 is directly positioned relative to fuel cell module 2 by a lower jig 110 and upper jig 112, without assembly as a fuel cell stack (Fig. 10). Therefore it does not occur that a fuel cell stack in which multiple fuel cells 16 are assembled will be incapable of attachment inside the fuel cell module 2. Also, multiple fuel cells in which both end portions are positioned relative to a fuel cell module 2 are temporarily affixed by ceramic adhesive injected onto a first affixing member by an adhesive injection apparatus 114 (Figs. 10, 13), therefore assembly is not made impossible at a stage when assembly using ceramic adhesive has terminated midway.

0165 Also, using the manufacturing apparatus for a solid oxide fuel cell apparatus 1 according to an embodiment of the present invention, lower jig 110 (Fig. 8) positions fuel cells 16 at a position on first affixing member 63 so that an essentially fixed gap is opened between one end portion of the fuel cells 16 and insertion holes 63a, and upper jig 112 (Fig. 12) positions the other end portion of fuel cells 16 at a position on collector chamber lower member 18b so that an essentially fixed gap is opened between the other end portion of fuel cells 16 and each of the insertion holes 18c (Fig. 25). Therefore even when there is bending due to manufacturing tolerances, fuel cells 16 can be reliably positioned inside fuel cell module 2.

0166 Using the solid oxide fuel cell apparatus 1 of an embodiment of the present invention, one end portion of fuel cells 16 is inserted into first affixing member 63, which is attached to generating chamber 10 in fuel cell module 2. Ceramic adhesive is filled into the gap between first affixing member 63 insertion holes 63a and one end of the fuel cells, thereby affixing each of the fuel cells (Fig. 23). I.e., fuel cells 16 are directly affixed to fuel cell module 2 without being assembled as a fuel cell stack. As a result, it does not occur that a fuel cell stack in which multiple fuel cells 16 are assembled will be incapable of attachment inside the fuel cell module.

0167 Using the solid oxide fuel cell apparatus 1 of an embodiment of the present invention, the other end portions of fuel cells 16 are inserted (Fig. 4) into insertion holes 18c on collector chamber lower member 18b, which is positioned at a predetermined position relative to the inside wall surface of generating chamber 10, therefore the other end portions of fuel cells 16 can also be positioned at a predetermined position relative to the inside wall surface of generating chamber 10.

0168 In addition, using the solid oxide fuel cell apparatus 1 of the present embodiment, collector chamber lower member 18b has an adhesive filling frame 18e (Fig. 4) into which ceramic adhesive can be injected; collector chamber lower member 18b is affixed to the other end portion of fuel cells 16 by injecting ceramic adhesive into adhesive filling frame 18e (Fig. 10 and step S4 in Fig. 24), with the other end portions of each fuel cell 16 inserted into each of the insertion holes 18c. Therefore the other end portions of each fuel cell 16 can be easily affixed by injecting ceramic adhesive into adhesive filling frame 18e.

0169 Also, using the solid oxide fuel cell apparatus 1 of the present embodiment collector chamber lower member 18b is positioned in such a way that an essentially uniform gap is formed relative to the inside wall surface of generating chamber 10 (Fig. 4), so that the flow of air inside generating chamber 10 can be made uniform, and sufficient air supplied to each fuel cell 16.

0170 Moreover, using the solid oxide fuel cell apparatus 1 of the present embodiment, multiple stays 64c are disposed on the inside wall surface of generating chamber 10 (Fig. 5), therefore collector chamber lower member 18b can be accurately positioned (Fig. 9 and step S3 in Fig. 24). By this means the injected ceramic adhesive can be uniformly dispersed, and each fuel cell 16 reliably affixed to collector chamber lower member 18b.

0171 In the solid oxide fuel cell apparatus 1 of the present embodiment, collector chamber lower member 18b constitutes a portion of exhaust collection chamber 18 (Fig. 4). In general, accurate positioning and affixing of each fuel cell 16 at both ends is necessary, and positioning each fuel cell 16 is difficult. Using the solid oxide fuel cell apparatus 1 of the present embodiment, collector chamber lower member 18b constitutes a portion of exhaust collection chamber 18, therefore a structure providing an exhaust collection chamber 18 can be easily achieved.

0172 Using the solid oxide fuel cell apparatus 1 of an embodiment of the present invention, ceramic adhesive is filled into a circular ring-shaped gap between the inside wall surface of inside cylindrical member 64 and dispersion chamber bottom member 72 (ceramic adhesive layer 124 in Figs. 18, 19). Therefore when heated in a workable hardening step by drying oven 116 to dry the adhesive, the part into which ceramic adhesive has been filled heats and dries in an essentially uniform manner. This enables the prevention of peeling away of the earlier-drying part of the ceramic adhesive from the part which dries and shrinks later, thereby suppressing the occurrence of cracking. In this embodiment, because the ceramic adhesive filled part has a circular ring shape, the ceramic adhesive hardens in an essentially uniform manner around the entire circumference. Also, because the volume of the ceramic adhesive shrinks during hardening, tensile stress is generated over the entirety of the ceramic adhesive layer during hardening, but because in this embodiment ceramic adhesive layer 124 has a circular ring shape, the tensile stress is dispersed in an essentially uniform manner over the entire circumference, and cracking caused by stress concentration can be suppressed. With the present embodiment, inside cylindrical member 64 and dispersion chamber bottom member 72 in fuel cell module 2 can be hermetically bonded using ceramic adhesive, and the risk of fuel depletion caused by defects in the airtightness of combustion gas dispersion chamber 76 can be avoided.

0173 Using the solid oxide fuel cell apparatus 1 of the present embodiment, ceramic adhesive is filled into a circular ring-shaped gap on the inside of inside cylindrical container 68 (ceramic adhesive layer 132 in Fig. 21) and hardened, thereby making it difficult for cracks to occur in the filled ceramic adhesive layer 132, such that an exhaust gas discharge flow path 21 can be constituted using ceramic adhesive. The risk of reduced emissions performance due to defects in the airtightness of exhaust gas discharge flow path 21 can thus be avoided.

0174 Moreover, using the solid oxide fuel cell apparatus 1 of the present embodiment, ceramic adhesive is filled into 72a (the ceramic adhesive layer 128 in Figs. 17 and 18) and hardened, therefore it is difficult for cracks to form in the filled ceramic adhesive layer 128, and the airtightness of electrical conductor conduit 72a can be secured. The risk of fuel depletion due to defects in the airtightness of combustion gas dispersion chamber 76 can thus be avoided.

0175 Also, using the solid oxide fuel cell apparatus 1 of the present embodiment, ceramic adhesive is filled (Fig. 19) into the circular ring-shaped gap between the collection chamber upper member 18a and collector chamber lower member 18b, which form exhaust collection chamber 18, and hardened, making it difficult for cracks to form in the filled ceramic adhesive layers 120a, 120b, so that an exhaust collection chamber 18 with airtightness can be formed using ceramic adhesive. Thus the risk of a reduction in emission performance or abnormal combustion due to airtightness defects in exhaust collection chamber 18 can be avoided.

0176 In addition, using the solid oxide fuel cell apparatus 1 of the present embodiment, circular cross section fuel cells 16 and the edge portions of circular insertion holes 18c and 63a are affixed using ceramic adhesive, making it difficult for cracks to occur in the affixed ceramic adhesive layers 118, 122, so that fuel cells 16 can be affixed with a high degree of airtightness using ceramic adhesive. The risk of fuel depletion or abnormal combustion due to defects in the airtightness between fuel cells 16 and insertion holes 18c, 63a can thus be avoided.

0177 We have explained above a preferred embodiment of the invention, but various changes may be made to the above-described embodiment.

In particular, in the above-described embodiment the workable hardening steps on each joint portion were implemented in the sequence of the joint portion between collection chamber lower member 18b and fuel cells 16, the joint portion between fuel cells 16 and first affixing member 63, the joint portion between collection chamber upper member 18a and collection chamber lower member 18b, the joint portion between dispersion chamber bottom member 72 and inside cylindrical member 64, and the joint portion between external cylindrical member 66 and inside cylindrical container 68, but as a variant example the invention can be constituted so that joining begins from the bottom end of the fuel cells.

0178 In the case above, the workable hardening step is performed the first time on the joint portion between fuel cells 16 and first affixing member 63, the second time on the joint portion between collection chamber lower member 18b and fuel cells 16, the third time on the joint portion between collection chamber upper member 18a and collection chamber lower member 18b, the fourth time on the joint portion between dispersion chamber bottom member 72 and inside cylindrical member 64, and the fifth time on the joint portion between external cylindrical member 66 and inside cylindrical container 68. In this variant example, the workable hardening step on the cell joint portion between fuel cells and other constituent members is implemented in the first and second iterations, which is the first half of the 5 iterations of the workable hardening step. Thus the largest number of workable hardening steps is implemented on the cell joint portions for which airtightness is particularly important, and airtightness at the cell joint portion can be reliably secured.

### Explanation of Reference Numerals

0179
- 1:: solid oxide fuel cell apparatus
- 2:: fuel cell module
- 4:: auxiliary unit
- 7:: thermal insulation
- 8:: fuel cell housing container
- 10:: electrical generating chamber
- 16:: fuel cells
- 16a:: single cell
- 18:: exhaust collection chamber
- 18a:: collection chamber upper member
- 18b:: collection chamber lower member (second affixing member)
- 18c:: insertion holes
- 18d:: jet openings
- 18e:: adhesive filling frame
- 19a:: large diameter seal
- 19b:: small diameter seal
- 19c:: cover member
- 20:: fuel gas supply flow path
- 21:: exhaust gas discharge flow path
- 22:: oxidant gas supply flow path
- 24:: water supply source
- 26:: pure water tank
- 28:: water flow volume regulator unit (water supply apparatus)
- 30:: fuel supply source
- 34:: heat exchanger
- 35:: electromagnetic valve
- 36:: desulfurizer
- 38:: fuel blower (fuel supply apparatus)
- 40:: air supply source
- 45:: generating air flow regulator unit 45 (oxidant gas supply apparatus)
- 50:: hot water production device
- 54:: inverter
- 56:: oxidant gas introducing pipe (oxidant gas introduction opening)
- 58:: exhaust gas exhaust pipe 58 (exhaust gas outflow opening)
- 60:: combustion catalyst
- 61:: sheath heater
- 62:: ignition heater
- 63:: first affixing member (dispersion chamber forming plate)
- 63a:: insertion holes
- 63b:: adhesive filling frame
- 64:: inside cylindrical member (generating chamber constituent member)
- 64a:: small holes
- 64b:: small holes
- 64c:: stays
- 64d:: 64d shelf member
- 65:: intermediate cylindrical member
- 66:: external cylindrical member
- 66a:: shelf member
- 67:: cover member
- 68:: inside cylindrical container (exhaust passage constituent member)
- 70:: external cylindrical container (supply passage constituent member)
- 72:: dispersion chamber bottom member
- 72a:: insertion pipe (electrical conductor passage)
- 72b:: thermal insulation
- 72c:: flange portion
- 74:: oxidant gas jetting pipe
- 76:: fuel gas dispersion chamber
- 78:: insulator
- 80:: bus bars
- 82:: power collector
- 86:: vaporization section
- 86a:: inclined plate
- 88:: water supply pipe
- 90:: fuel gas supply pipe
- 92:: fuel gas supply flow path partition
- 92a:: jet openings
- 94:: reforming section
- 96:: reforming catalyst
- 97:: porous support body
- 98:: fuel electrode
- 99:: reaction suppression layer
- 100:: solid electrolyte layer
- 101:: air electrode
- 102:: interconnector layer
- 103a:: electrode layer
- 103b:: electrode layer
- 104b:: lead film layer
- 110:: lower fixture (first positioning apparatus)
- 110a:: positioning shaft
- 110b:: base surface
- 112:: upper fixture (second positioning apparatus)
- 112a:: truncated cones
- 114:: adhesive injection apparatus (adhesive application apparatus)
- 116:: drying oven (heating apparatus, adhesive hardening apparatus)
- 116a:: heating controller
- 118:: ceramic adhesive layer
- 118a:: prominence
- 118b:: hanging portion
- 120a:: ceramic adhesive layer
- 120b:: ceramic adhesive layer
- 122:: ceramic adhesive layer
- 124:: ceramic adhesive layer
- 126:: dispersion chamber seal
- 128:: ceramic adhesive layer
- 130:: center seal plate
- 132:: ceramic adhesive layer
- 134:: exhaust passage seal
- 136:: heated air introduction pipe

## Claims

1. A manufacturing method for a solid oxide fuel cell apparatus in which multiple fuel cells are adhered and affixed to a first affixing member attached within a fuel cell module, the method comprising steps of:
inserting one end portion of each of the fuel cells into respective insertion holes provided in the first affixing member;
respectively positioning one end portion of each of the fuel cells inserted into each of the insertion hole relative to the fuel cell module;
respectively positioning the other end portion of each of the fuel cells at a predetermined position relative to the fuel cell module;
applying ceramic adhesive onto the first affixing member into which each of the fuel cells is inserted; and
hardening the applied ceramic adhesive and affixing each of the fuel cells to the first affixing member.

2. The manufacturing method according to Claim 1, in which the other end portion of each of the fuel cells is inserted into insertion holes provided on a second affixing member, the method further comprising steps of:
applying ceramic adhesive onto the second affixing member into which the other end portion of each of the fuel cells is inserted; and
hardening the applied ceramic adhesive and affixing each of the fuel cells to the second affixing member.

3. The manufacturing method according to claim 2, further comprising a solvent removal and hardening step in which ceramic adhesive applied onto the first affixing member and second affixing member and hardened is dried to a state capable of withstanding a temperature rise in a startup procedure of the solid oxide fuel cell apparatus.

4. A manufacturing apparatus for a solid oxide fuel cell apparatus in which multiple fuel cells are adhered and affixed to a first affixing member attached within a fuel cell module, comprising:
a first positioning apparatus that respectively positions one end portion of each of the fuel cells relative to the fuel cell module with the one end portion of each of the fuel cells inserted into insertion holes provided on the first affixing member;
a second positioning apparatus that respectively positions the other end portion of each of the fuel cells at a predetermined position relative to the fuel cell module;
an adhesive application apparatus that applies ceramic adhesive onto the first affixing member with one end portion of each of the fuel cells inserted into the insertion holes of the first affixing member; and
an adhesive hardening apparatus that hardens applied ceramic adhesive and affixing each of the fuel cells to the first affixing member while one end portion and the other end portion of each of the fuel cells are in a positioned state.

5. The manufacturing apparatus according to Claim 4, in which the other end portion of each of the fuel cells is affixed by ceramic adhesive to a second affixing member with the other end portion of each of the fuel cells is inserted into the insertion holes provided in the second affixing member, wherein the first positioning apparatus positions one end portion of each of the fuel cells in such a way that an approximately uniform gap is present between one end portion of each of the fuel cells and the insertion hole in the first affixing member, and a second positioning apparatus positions the other end portion of each of the fuel cells in such a way that an approximately uniform gap is present between the other end portion of each of the fuel cells and the insertion hole in the second affixing member.

6. A solid oxide fuel cell apparatus for generating electricity by supplying fuel and oxidant gas to fuel cells housed in a fuel cell module, comprising:
a first affixing member fixed to a generating chamber of the fuel cell module and provided with multiple insertion holes;
wherein one end portion of each of the fuel cells is inserted into the respective insertion holes and positioned at a predetermined position relative to the fuel cell module, separated by a predetermined gap from the edge portion of each of the insertion holes; and
wherein each of the fuel cells is affixed to the first affixing member by filling the gap between each of the insertion holes and one end portion of each of the fuel cells with ceramic adhesive, and airtightness in the adhering portion between each of the fuel cells and each of the insertion hole is secured.

7. The solid oxide fuel cell apparatus according to Claim 6, further comprising a second affixing member disposed at the other end portion of each of the fuel cells, wherein multiple insertion holes for inserting the other end portion of each of the fuel cells are formed on the second affixing member, and the second affixing member is positioned at a predetermined position relative to an inside wall surface of the generating chamber.

8. The solid oxide fuel cell apparatus according to Claim 7, wherein the second affixing member comprises an adhesive receiving section into which ceramic adhesive can be applied, wherein the second affixing member is affixed to the other end portion of each of the fuel cells by applying ceramic adhesive into the adhesive receiving section with the other end portions of the fuel cells inserted into each of the insertion holes.

9. The solid oxide fuel cell apparatus according to Claim 8, wherein the second affixing member is positioned by a positioning member so that a uniform gap is formed between the second affixing member and the inside wall surface of the generating chamber.

10. The solid oxide fuel cell apparatus according to Claim 8, wherein the second affixing member constitutes a portion of an exhaust collection chamber for collecting remaining fuel which has not been used for electrical generation in each of the fuel cells.

11. The solid oxide fuel cell apparatus according to Claim 6, further comprising a dispersion chamber bottom member, wherein the generating chamber is formed by a cylindrical generating chamber constituent member disposed to surround the multiple fuel cells; the first affixing member is attached to the inside wall surface of the generating chamber constituent member to form a fuel gas dispersion chamber for distributing supplied fuel to the multiple fuel cells; and wherein the dispersion chamber bottom member is hermetically attached to the inside wall surface of the generating chamber constituent member and forms the fuel gas dispersion chamber together with the first affixing member by filling and hardening of ceramic adhesive in a gap between the inside wall surface of the generating chamber constituent member and the dispersion chamber bottom member, the gap has a circular ring or elliptical ring shaped-cross section perpendicular to the longitudinal direction of the generating chamber constituent member.

12. The solid oxide fuel cell apparatus according to Claim 11, further comprising a cylindrical exhaust passage constituent member disposed to surround the generating chamber constituent member, wherein a gap having a circular ring or elliptical ring-shaped cross section is formed perpendicular to the longitudinal direction of the generating chamber constituent member on the inside of the inner wall surface of the exhaust passage constituent member, and the exhaust passage constituent member is hermetically affixed by the filling in and hardening of the ceramic adhesive in the gap.

13. The solid oxide fuel cell apparatus according to Claim 12, wherein the dispersion chamber bottom member comprises an electrical conductor passage having circular or elliptical shaped cross section, for enabling the pass through of an electrical conductor for extracting power from the fuel cells, and wherein the electrical conductor is extracted in an airtight manner from the fuel gas dispersion chamber by the filling and hardening of ceramic adhesive in the electrical conductor passage.

14. The solid oxide fuel cell apparatus according to Claim 12, further comprising an exhaust collection chamber for collecting remaining fuel which has not been used for electrical generation in the multiple fuel cells, wherein the exhaust collection chamber is formed by hermetically bonding at least two members with ceramic adhesive; a gap with a circular ring or elliptical ring-shaped cross section is formed between the members forming the exhaust collection chamber, and the exhaust collection chamber is formed by the filling and hardening of ceramic adhesive in the gap.

15. The solid oxide fuel cell apparatus according to Claim 12, wherein each of the multiple fuel cells is round in cross section, and each of the fuel cells is affixed to the edge portions of multiple round insertion holes formed in the first affixing member.
